# FASCICULE DE BREVET EUROPEEN

(11) **EP 1 309 647 B1**
(45) Date de publication et mention de la délivrance du brevet: **03.10.2007**
(21) Numéro de dépôt: 01965319.5
(22) Date de dépôt: 09.08.2001
(51) Int. Cl.: C08G 77/38, C07F 15/00, C07F 15/04, C08K 5/00

(54) **PROCEDE DE PREPARATION D'HUILES SILICONES PAR HYDROSILYLATION DE SYNTHONS CONTENANT AU MOINS UN CYCLE HYDROCARBONE DANS LEQUEL EST INCLUS UN ATOME D'OXYGENE EN PRESENCE D'UN COMPLEXE METALLIQUE CATALYTIQUE**
VERFAHREN ZUR HERSTELLUNG VON SILIKONÖLEN DURCH HYDROSILYLIERUNG VON SAUERSTOFF-ENTHALTENDEN ZYCLISCHEN KOHLENWASERSTOFFEN IN ANWESENHEIT VON METALLKOMPLEXEN
METHOD FOR PREPARING SILICONE OILS BY HYDROSILYLATION OF SYNTHONS CONTAINING AT LEAST A HYDROCARBON CYCLE WHEREIN IS INCLUDED AN OXYGEN ATOM IN THE PRESENCE OF A CATALYTIC METAL COMPLEX

(30) Priorité: 17.08.2000 FR 0010684
(43) Date de publication de la demande: 14.05.2003
(73) Titulaire: Bluestar Silicones France, 69486 Lyon Cedex 3 (FR)
(72) Inventeur: STERIN, Sébastien, F-69002 Lyon (FR)
(86) Numéro de dépôt international: PCT/FR2001/002584
(87) Numéro de publication internationale: WO 2002/014407

(56) Documents cités:
- EP-A- 0 416 471
- WO-A-95/25734
- WO-A-95/25735
- WO-A-97/47677
- FR-A- 2 750 349
- FR-A- 2 801 887
- US-A- 3 775 452
- US-A- 4 588 800

## Description

La présente invention concerne un nouveau procédé de préparation d'huiles silicones fonctionnalisées de viscosité contrôlée contenant au moins un cycle hydrocarboné dans lequel est inclus un atome d'oxygène. En particulier, la présente invention a pour objet un procédé d'hydrosilylation entre des polyorganohydrogénosiloxanes et des synthons insaturés contenant au moins un cycle hydrocarboné dans lequel est inclus un atome d'oxygène.

Les réactions entre des polyorganohydrogénosiloxanes et des oléfines ou des hydrocarbures acétyléniques sont très connues. Les polyorganohydrogénosiloxanes sont, par exemples de formules :
- Me₃SiO-(MeHSiO)ₙ-(Me₂SiO)ₘ- SiMe₃ dans laquelle n et m sont des nombres entiers ou fractionnaires tel que 1 ≤ n ≤ 1000 et 0 <m ≤ 1000;
- Me₂HSiO-(MeHSiO)ₒ-(Me₂SiO)ₚ- SiHMe₂ dans laquelle o et p sont des nombres entiers ou fractionnaires tel que 0< o ≤ 1000 et 0 < p ≤ 1000.

De nombreux synthons peuvent fonctionnaliser les polyorganohydrogénosiloxanes; par exemple, on utilise comme synthons des alcènes, des styrènes, des allylalcools, des allyloxyethers ou des allylamines.
Ces réactions sont très couramment utilisées pour la synthèse d'huiles silicones fonctionnalisées et les huiles obtenues ont des applications dans des domaines très divers tels que l'anti-adhérence, la lubrification.

En particulier, on peut préparer des huiles fonctionnalisées avec des synthons de 1,2-époxy-4-vinyl-cyclohexane. A titre d'application, ces huiles silicones fonctionnalisées sont ensuite réticulées thermiquement en présence d'un catalyseur acide tel que l'acide chlorhydrique ou l'acide sulfurique, ou photochimiquement en présence, par exemple, de photoamorceur cationique pour la préparation de films anti-adhérents pour papier et/ou plastiques.

Un nombre très important de compositions catalytiques est utilisé dans les réactions d'hydrosilylation. Les compositions catalytiques les plus connues contiennent des métaux tels que le platine, le rhodium, le cobalt ou le palladium. Des exemples spécifiques de telles compositions catalytiques sont les halogénures de platine et les halogénures de rhodium, par exemple H₂PtCl_{6,} PtCl₂, (RhCl₃,xH₂O) les complexes de platine avec des siloxanes ayant des groupes insaturés, les complexes de platine avec des oléfines et complexes cationiques de platine avec des nitriles comme ligands.

Généralement, les compositions catalytiques utilisées dans la réaction d'hydrosilylation sont des compositions catalytiques homogènes, i.e., lesdites compositions sont dissoutes dans le milieu réactionnel. L'une des plus employées est la composition catalytique de Karstedt décrite notamment dans le brevet US 3,775,452; cette composition de Karstedt est constituée de complexes de platine dont le degré d'oxydation formel et réel est de zéro (0) et de formule : 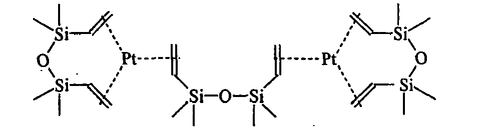 Toutefois, lors de la réaction d'hydrosilylation selon les procédés de l'art antérieur, on observe à différents degrés des réactions d'isomérisation au sein des synthons insaturés, ce qui nécessite de travailler en excès molaire de synthons par rapport au polyorganohydrogénosiloxane dans le milieu réactionnel. Cet excès en proportion de synthon entraîne un coût supplémentaire pour la mise en oeuvre industrielle du procédé. Il serait donc souhaitable de réduire la proportion nécessaire de synthon, ce qui se traduirait par une économie non négligeable au niveau du procédé.

En outre, les procédés d'hydrosilylation de l'art antérieur ne sont pas ou peu adaptés pour les réactions d'hydrosilylation entre des polyorganohydrogénosiloxanes et des synthons contenant un cycle dans lequel est inclus un atome d'oxygène (époxyde, etc.). Ces derniers, lors de la réaction d'hydrosilylation et/ou l'étape de dévolatilisation, ont tendance à s'ouvrir et à provoquer des réactions de polymérisation et de réticulation (formation de gomme et/ou de résine) non contrôlées des huiles fonctionnalisées, lesquelles sont initiées par la présence des compositions catalytiques habituelles telles que les compositions catalytiques homogènes qui catalysent aussi la polymérisation de cycles incluant un atome d'oxygène.

D'autre part, les huiles silicones fonctionnalisées obtenues à partir de procédés usuels sont généralement colorées, de l'ordre de 120 à 300 hazen; ce qui limite de ce fait leurs domaines envisageables d'utilisation, notamment dans le domaine de films transparents et anti-adhérents pour papier ou pour films transparents (par exemple de type polyester). Cette coloration est généralement due à la présence dans les huiles fonctionnalisées d'agrégats métalliques ou de colloïdes de taille nanométrique, dérivés des compositions catalytiques usuelles. Dans ces cas, les huiles silicones fonctionnalisées nécessitent des étapes supplémentaires de filtration et purification pour pouvoir être utilisable après réticulation dans le domaine des films transparents; ces étapes complémentaires rendent la mise en oeuvre industrielle onéreuse et donc peu viable économiquement.

La Demanderesse a mis au point un nouveau procédé de préparation des huiles silicones fonctionnalisées par hydrosilylation qui permet de réduire de façon significative les réactions d'isomérisation au sein du synthon insaturé et de réduire très sensiblement l'ouverture de cycle incluant un atome d'oxygène présent sur le synthon insaturé.

Le procédé mis en oeuvre permet d'obtenir des huiles silicones fonctionnalisées moins colorées que celles obtenues en utilisant un procédé avec un catalyseur de type Karstedt ; ce qui permet de limiter ou supprimer les étapes de purification. Selon les cas, les huiles obtenues sont transparentes et/ou translucides et donc utilisables directement dans des applications exigeant ces qualités.

En particulier, les huiles silicones obtenues à partir du procédé de l'invention sont utilisables après réticulation dans le domaine des encres, le domaine des vernis ainsi que dans le domaine des revêtements, notamment des films, transparents et/ou anti-adhérents par applications sur des supports de natures très variées; par exemple, papiers, verres, plastiques et/ou métaux.

Selon le procédé d'hydrosilylation de la présente invention, le polyorganohydrogénosiloxane est mis à réagir avec des synthons différents ou identiques contenant un cycle hydrocarboné dans lequel est inclus au moins un atome d'oxygène. Cette réaction est effectuée en présence d'un complexe métallique catalytique de formule I : 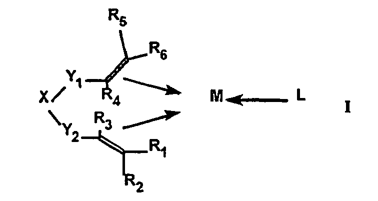 dans laquelle :
- M représente un métal à l'état d'oxydation 0 choisi parmi les métaux du groupe 8 du tableau périodique tel que publié dans Handbook of Chemistry and Physics, 65ème édition, 1984-1985 ;
- X représente O, NRₐ et/ou CR_{f}R_{g} ;
- Y₁ et Y₂ , identiques ou différents, représentent CR_{b}R_{c} et/ou SiR_{d}Rₑ ;
- R₁, R₂, R₅ et R₆, identiques ou différents, sont choisis parmi un atome d'hydrogène, un groupe alkyle et un groupe aryle éventuellement substitué par alkyle ;
- R₃, R₄, Rₐ, R_{b}, R_{c} , identiques ou différents, sont choisis parmi un atome d'hydrogène; un groupe alkyle; un groupe acyle ; un groupe aryle éventuellement substitué par un alkyle; un groupe cycloalkyle éventuellement substitué par un alkyle; et un groupe arylalkyle dans lequel la partie aryle est éventuellement substituée par une partie alkyle ;
- R_{d} et R_{e,} identiques ou différents, sont choisis parmi un alcényle; un alcynyle; un alkyle; un alcoxy; un acyle; un aryle éventuellement substitué par un alkyle; un cycloalkyle éventuellement substitué par un alkyle; et un arylalkyle dans lequel la partie aryle est éventuellement substituée par un alkyle; ou bien
- lorsque Y₁ et Y₂, identiques ou différents, représentent SiR_{d}Rₑ, deux groupes R_{d} liés à deux atomes de silicium distincts forment ensemble:
   * une chaîne de formule : 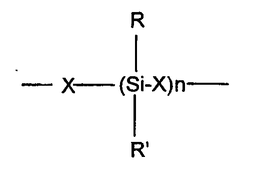 dans laquelle n est un entier de 1 à 3 ; X est tel que défini ci-dessus ; R et R', identiques ou différents, prennent l'une quelconque des significations données ci-dessus pour Rₑ, étant entendu que, lorsque n est 2 ou 3, un seul atome de silicium de ladite chaîne peut être substitué par un ou deux groupes alcényle ou alcynyle ;
   * une chaîne hydrocarbonée saturée, les deux groupes R_{d} ensemble avec lesdits atomes de silicium et X formant un cycle de 6 à 10 chaînons ; ou bien
- lorsque Y₁ et Y₂ , identiques ou différents, représentent CR_{b}R_{c}, deux groupes R_{b} liés à des atomes de carbone distincts forment ensemble une chaîne hydrocarbonée saturée, les deux groupes R_{b} ensemble avec les atomes de carbone qui les portent et X formant un cycle de 6 à 10 chaînons ;
- R_{f} et R_{g} représentent indépendamment l'un de l'autre un atome d'hydrogène ; un groupe alkyle; un groupe acyle ; un groupe aryle éventuellement substitué par alkyle ; un groupe cycloalkyle éventuellement substitué par un alkyle ; un groupe arylalkyle dans lequel la partie aryle est éventuellement substituée par alkyle; un atome d'halogène ; un groupe alcényle ; un groupe alcynyle ; ou un groupe SiG₁G₂G₃ où G₁, G₂ et G₃ sont indépendamment l'un de l'autre un alkyle; un alkoxy ; un aryle éventuellement substitué par un alkyle ou un alkoxy ; ou un groupe arylalkyle dans lequel la partie aryle est éventuellement substituée par un alkyle ou un alkoxy ;
- L représente un carbène de formule II: 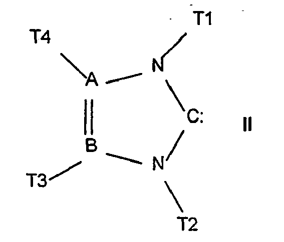
dans lesquelles :
- A et B, identiques ou différents, représentent C ou N, étant entendu que lorsque A représente N, alors T₄ ne représente rien et lorsque B représente N, alors T₃ ne représente rien ;
- T₃ et T₄, identiques ou différents, représentent un atome d'hydrogène ; un groupe alkyle; un groupe cycloalkyle éventuellement substitué par un alkyle ou un alkoxy; un groupe aryle éventuellement substitué par un alkyle ou un alkoxy; un groupe alcényle; un groupe alcynyle; ou un groupe arylalkyle dans lequel la partie aryle est éventuellement substituée par un alkyle ou un alkoxy ;
- T₁ et T₂, identiques ou différents, représentent (i) un groupe alkyle ; (i) un groupe alkyle perfluoré ou éventuellement substitué par un groupe perfluoroalkyle ; (iii) un groupe cycloalkyle éventuellement substitué par un groupe alkyle ou alkoxy ; (iv) un groupe aryle éventuellement substitué par un groupe alkyle ou alkoxy ; (v) un groupe alcényle ; (vi) un groupe alcynyle ; ou (vii) un groupe arylalkyle dans lequel la partie aryle est éventuellement substituée par un groupe alkyle ou alkoxy ;
- ou bien T₁ et T₂, identiques ou différents, représentent un radical monovalent de formule (V) suivante :

   -V₁-V₂ (V)

   dans laquelle :
   - V₁ est un radical divalent hydrocarboné, de préférence un alkylène linéaire ou ramifié en C₁-C₁₀, éventuellement substitué,
   - V₂ est un radical monovalent choisi dans le groupe des substituants suivants :
      ◆ alcoxy, -OR^{ν} avec R^{ν} correspondant à hydrogène, alkyle, aryle, amine, de préférence N(R^{ν})₂ avec R^{ν} correspondant à hydrogène, alkyle, aryle,
- ou bien encore T₁ et T₂, identiques ou différents, représentent un radical monovalent de formule (W) suivante :

   -W₁-ω-W₂ (W)

   dans laquelle :
   - W₁ est un radical divalent hydrocarboné, de préférence un alkylène linéaire ou ramifié en C₁-C₁₀, éventuellement substitué,
   - ω représente :
      - R^{α}C = CR^{α} - , avec R^{α} correspondant à H ou un groupement alkyle
         ou

         -C≡C-
   - W₂ est un radical monovalent choisi dans le groupe des substituants suivants :
      ◆ R^{β} = alkyle, H ;
      ◆ Si-alkyle ou Si-alcoxy, de préférence -Si(R^{δ})₃ avec R^{δ} = alkyle ;
      ◆ alcool, de préférence -C(R^{ε})₂OH avec R^{ε}= OH, H ou alkyle ;
      ◆ cétone, de préférence 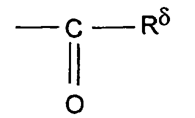 avec R^{δ} = alkyle ; alcényle, alcynyle ;
      ◆ carboxy, de préférence 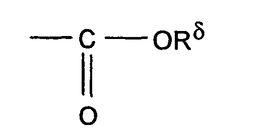 avec R^{δ} = alkyle ; alcényle, alcynyle ;
      ◆ amide, de préférence 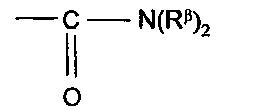 avec R^{β} = H, alkyle; alcényle, alcynyle;
      ◆ acyle, de préférence 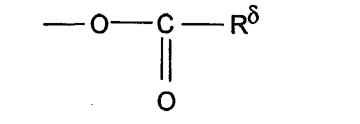
      avec R^{δ} = alkyle ; alcényle, alcynyle ;
- ou bien encore, les substituants T₁, T₂, T₃ et T₄, peuvent former deux à deux, lorsqu'ils sont situés sur deux sommets adjacents dans la formule II une chaîne hydrocarbonée saturée ou insaturée.

Selon l'invention, le degré d'oxydation 0 du métal M est une caractéristique essentielle de l'invention.

De préférence, M, métal du groupe 8, est choisi parmi le palladium, le platine et/ou le nickel. Selon un mode de réalisation plus préférentiel de l'invention, M représente le platine à l'état d'oxydation 0.

Par alkyle, on entend selon l'invention une chaîne hydrocarbonée saturée, linéaire ou ramifiée, de préférence de 1 à 10 atomes de carbone, par exemple de 1 à 8 atomes de carbone, mieux encore de 1 à 7 atomes de carbone. Des exemples de groupes alkyle sont notamment méthyle, éthyle, isopropyle, n-propyle, tert-butyle, isobutyle, n-butyle, n-pentyle, isoamyle et 1,1-diméthylpropyle.

Selon l'invention, la partie alkyle du radical alcoxy est telle que définie ci-dessus.

Le radical alkyle perfluoré ou éventuellement substitué par un groupe perfluoroalkyle a de préférence pour formule : -(CH₂)ₚ-C_{q}F_{2q+1} dans laquelle p représente 0, 1, 2, 3 ou 4 ; q est un entier de 1 à 10 ; et C_{q}F_{2q+1} est linéaire ou ramifié. Des exemples préférés de ce radical sont : -(CH₂)₂-(CF₂)₅-CF₃ et -(CF₂)₇-CF₃.

L'expression aryle désigne un groupe hydrocarboné aromatique de 6 à 18 atomes de carbone, monocyclique ou polycyclique et de préférence monocyclique ou bicyclique. Il doit être entendu que, dans le cadre de l'invention, par radical aromatique polycyclique, on entend un radical présentant deux ou plusieurs noyaux aromatiques, condensés les uns aux autres, c'est-à-dire présentant, deux à deux, au moins deux carbones en commun. A titre d'exemple, on peut mentionner les radicaux phényle, naphtyle, anthryle et phénanthryle.

L'expression arylalkyle désigne un groupe alkyle tel que défini ci-dessus, substitué par un ou plusieurs groupes aryle sur sa chaîne hydrocarbonée, le groupe aryle étant tel que défini ci-dessus. Des exemples en sont benzyle et triphénylméthyle.

Par acyle, on entend selon l'invention, un groupe Rₒ-CO- où Rₒ représente alkyle tel que défini ci-dessus ; ou bien un groupe Ar-CO- où Ar représente un groupe aryle tel que défini ci-dessus, ou bien arylalkyle dans lequel aryle et alkyle sont tels que définis ci-dessus et dans lequel la partie aryle est éventuellement substituée par alkyle.

Par cycloalkyle, on entend un radical hydrocarboné saturé mono- ou polycyclique, de préférence mono- ou bicyclique, présentant préférablement de 3 à 10 atomes de carbone, mieux encore de 3 à 8. Par radical hydrocarboné saturé polycyclique, on entend un radical présentant deux ou plusieurs noyaux cycliques rattachés les uns aux autres par des liaisons σ ou/et condensés deux à deux. Des exemples de groupes cycloalkyle polycycliques sont adamantane et norbornane. Des exemples de groupes cycloalkyle monocycliques sont cyclopropyle, cyclobutyle, cyclopentyle, cyclohexyle, cycloheptyle et cyclooctyle.

Par alcényle, on entend une chaîne hydrocarbonée insaturée, linéaire ou ramifiée, présentant au moins une double liaison oléfinique, et plus préférablement une seule double liaison. De préférence, le groupe alcényle présente de 2 à 8 atomes de carbone, mieux encore de 2 à 6. Des exemples préférés de groupes alcényle sont les groupes vinyle et allyle.

Par alcynyle, on entend selon l'invention, une chaîne hydrocarbonée insaturée, linéaire ou ramifiée, présentant au moins une triple liaison acétylénique, et plus préférablement une seule triple liaison. De préférence, le groupe alcynyle présente de 2 à 8 atomes de carbone, mieux encore de 2 à 6 atomes de carbone. A titre d'exemple, on peut citer le groupe acétylényle, ainsi que le groupe propargyle.

Selon un mode de réalisation préféré de l'invention, Y₁ et Y₂ représentent soit tous les deux CR_{b}R_{c}, soit tous les deux SiR_{d}Rₑ, de telle sorte que les composés préférés de l'invention ont, soit pour formule I.1, soit pour formule I.2 : 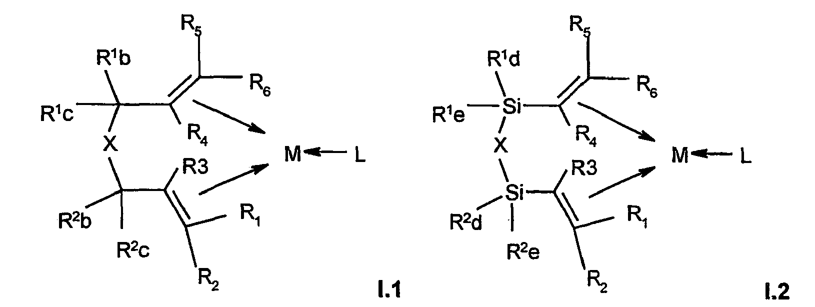 où
- R_{b}¹ et Rₑ¹ sont les substituants R_{b} et R_{c}, de Y₁ dans la formule I.1 ;
- R_{b}² et R_{c}² sont les substituants R_{b} et R_{c} de Y₂ dans la formule I.2 ;
- R_{d}¹ et Rₑ¹ sont les substituants R_{d} et Rₑ de Y₁ dans la formule I.1 ;
- et R_{d}² et Rₑ² sont les substituants R_{d} et Rₑ de Y₂ dans la formule I.2.

Ainsi, R_{b}¹ peut être identique ou différent de R_{b}² ; R_{c}¹ peut être identique ou différent de R_{c}² ; R_{d}¹ peut être identique ou différent de R_{d}² ; et Rₑ¹ peut être identique ou différent de Rₑ².

De manière préférée, R_{b}¹ = R_{b}²; R_{c}¹ = R_{c}² ; R_{d}¹ = R_{d}² ; et Rₑ¹ = Rₑ².

Parmi ces derniers composés, ceux pour lesquels R₃ = R₄ ; R₅ = R₂ ; et R₁= R₆, sont encore préférés.

Selon une autre variante préférée de l'invention, R_{d}¹ et R_{d}² forment ensemble :
(a) soit une chaîne 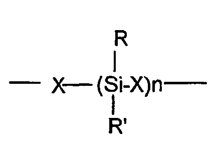 dans laquelle n est un entier de 1 à 3 ; X est tel que défini ci-dessus ; et R et R', identiques ou différents, prennent l'une quelconque des significations données ci-dessus pour Rₑ,
(b) soit une chaîne hydrocarbonée saturée, de telle sorte que les deux substituants R_{d,} ensemble avec les deux atomes de silicium qui les portent et X, forment un cycle de 6 à 10 chaînons, de préférence de 6 à 8 chaînons.

Lorsque R_{d}¹ et R_{d}² forment la chaîne (a), on préfère que n soit égal à 1 ou 2 et plus particulièrement 1 et que R = Rₑ, les deux groupes Rₑ portés par les deux atomes de silicium étant identiques. Dans ce cas, Rₑ représente préférablement alkyle, par exemple méthyle. Plus particulièrement dans ces composés, R' représente -CR₃=CR₁R₂ avec R₁ = R₆, R₂ = R₅ et R₃ = R₄.

Lorsque R_{d}¹ et R_{d}² forment la chaîne (b), on préfère que les deux groupes R_{d}, ensemble avec les deux atomes de silicium et le groupe X, forment un cycle à 8 chaînons. Dans ce cas, on préfère que Rₑ¹ soit identique à Rₑ². Ces composés ont pour formule générale : 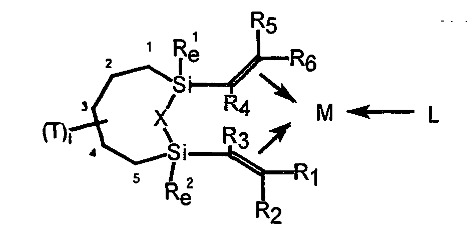 où T représente un groupe alkyle , i est un nombre entier compris entre 0 et 5, T étant situé sur un ou plusieurs des sommets 1, 2, 3, 4 et 5 de la formule ci-dessus.

De la même façon, lorsque Y₁ et Y₂ représentent CR_{b}R_{c}, les deux groupes R_{b} liés à des atomes de carbone distincts peuvent former ensemble une chaîne hydrocarbonée saturée (c), de telle sorte que les deux groupes R_{b} ensemble avec les carbones qui les portent et X forment un cycle de 6 à 10 chaînons. De préférence, le cycle formé est un cycle à 8 chaînons, auquel cas le complexe métallique répond à la formule : 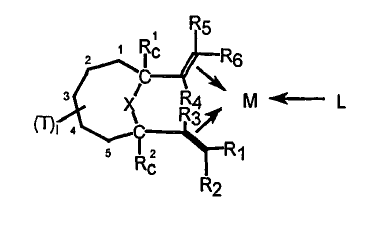 où T représente un groupe alkyle ; i est un nombre entier compris entre 0 et 5, T étant situé sur un ou plusieurs des sommets 1, 2, 3, 4 et 5 de la formule ci-dessus.

Dans le cadre de l'invention, deux groupes R_{d} liés à deux atomes de silicium distincts peuvent former une chaîne de formule :

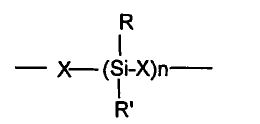

Lorsque c'est le cas, on préfère que X représente O dans les composés de l'invention. Ces composés préférés ont pour formule générale :

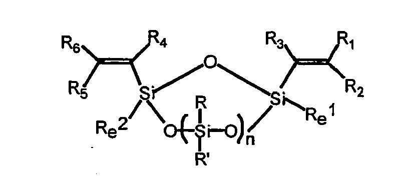

Parmi ces composés, on préfère que Rₑ¹ = Rₑ². Avantageusement Rₑ¹ = Rₑ² représente alkyle (par exemple méthyle).

L'expression "ne représente rien" signifie que les substituants -T₃, respectivement -T₄, sont inexistants. En effet, dans les formules II, l'atome d' azote est trivalent, de telle sorte que lorsque A ou B représente N, l'atome d'azote ne peut présenter de substituant supplémentaire.

Selon un mode de réalisation particulier de l'invention, les carbènes de formules Il présentent au moins deux noyaux condensés, c'est-à-dire que deux substituants au moins parmi T₁, T₂, T₃ et T₄, situés sur deux sommets adjacents, forment ensemble une chaîne hydrocarbonée saturée ou insaturée, présentant de préférence de 3 à 6 atomes de carbone. Par chaîne hydrocarbonée saturée ou insaturée, on entend une chaîne hydrocarbonée linéaire ou ramifiée pouvant présenter ou non une ou plusieurs insaturations de type double liaison oléfinique ou triple liaison acétylénique.

Lorsque les carbènes II présentent deux noyaux condensés, ils répondent donc à l'une des formules suivantes, dans lesquelles (alk) représente une chaîne hydrocarbonée saturée ou insaturée :

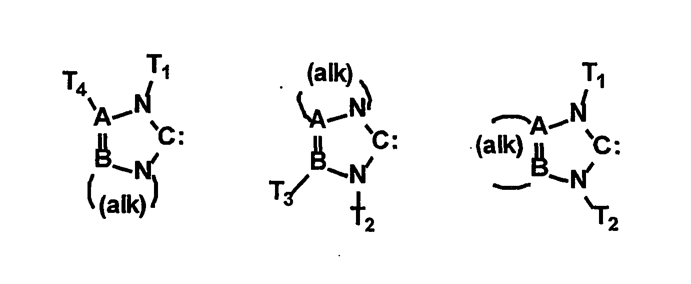

Il doit être entendu cependant que les carbènes II peuvent présenter plus de deux noyaux condensés.

Lorsque R_{f} et/ou R_{g} représente SiG₁G₂G₃, on préfère que R_{f} et/ou R_{g} soit trialkylsilyle, par exemple SiG₁G₂G₃ où G₁ = G₂ = G₃ = alkyle.

Des sous-groupes des complexes métalliques de l'invention sont constitués des complexes pour lesquels :
- X = O ; Y₁ et Y₂ représentent indépendamment SiR_{d}Rₑ ; ou
- X = NRₐ ; Y₁ et Y₂ représentent indépendamment CR_{b}R_{c} ; ou
- X = NRₐ ; Y₁ et Y₂ représentent indépendamment SiR_{d}Rₑ ; ou
- X = CR_{f}R_{g} ; Y₁ et Y₂ représentent indépendamment CR_{b}R_{c} ; ou
- X = CR_{f}R_{g} ; Y₁ et Y₂ représentent indépendamment SiR_{d}Rₑ.

Parmi ces 5 familles de complexes métalliques de formule I, on préfère ceux pour lesquels :
- X = O, Y₁ et Y₂ représentent indépendamment SiR_{d}Rₑ ; ou
- X = NRₐ, Y₁ et Y₂ représentent indépendamment CR_{b}R_{c} ; ou
- X = CR_{f}R_{g}, Y₁ et Y₂ représentent indépendamment CR_{b}R_{c}.

Très préférablement, X = O et Y₁ et Y₂ représentent indépendamment SiR_{d}Rₑ dans le complexe métallique de formule 1.

Dans le cadre de l'invention, l'expression "représentent indépendamment" signifie que les substituants désignés sont soit identiques soit différents.

De préférence encore, R₁, R₂, R₅ et R₆ sont des atomes d'hydrogène.

Des significations préférées de R₃ et R₄ sont notamment un atome d'hydrogène ; un groupe alkyle; aryle éventuellement substitué par alkyle; et cycloalkyle éventuellement substitué par alkyle. Parmi ces significations préférées, il est particulièrement avantageux que R₃ et R₄, identiques, représentent un atome d'hydrogène ; (C₃-C₈)cycloalkyle ou (C₁-C₈)alkyle.

De préférence encore, le ligand dioléfinique du complexe de formule I est symétrique, c'est-à-dire que R₅ = R₂ ; R₆ = R_{1 ;} R₃ = R₄ et les deux groupes Y₁, Y₂ sont soit strictement identiques entre eux, soit Y₁ = CR_{b}¹R_{c} et Y₂ = CR_{b}²R_{c} où R_{b}¹ et R_{b}² forment ensemble une chaîne symétrique, soit encore Y₁ = SiR_{d}¹Rₑ et Y₂ = SiR_{d} ²Rₑ où R_{d}¹ et R_{d}² forment ensemble une chaîne symétrique.

Un groupe préféré de complexes selon l'invention est constitué des complexes de formule I dans lesquels L représente un carbène de formule II. De manière préférée, A et B dans les formules II représentent tous deux un atome de carbone.

Des significations préférées de T₁ et T₂ sont alkyle; cycloalkyle; arylalkyle; et aryle éventuellement substitué par alkyle.

Des significations préférées de T₃ et T₄ sont hydrogène ; alkyle ; cycloalkyle ; arylalkyle ; et aryle éventuellement substitué par alkyle.

De façon préférée, lorsque T₁, T₂, T₃ ou T₄ représente alkyle, alors alkyle est méthyle, isopropyle ou tert-butyle.

De même, lorsque T_{1,} T₂, T₃ ou T₄ représente aryle, alors aryle est phényle.

Lorsque T₁, T₂, T₃ ou T₄ représente aryle éventuellement substitué par alkyle, alors T₁, T₂, T₃ ou T₄ est tolyle ou xylyle.

Lorsque T₁, T₂, T₃ ou T₄ représente arylalkyle, alors arylalkyle est de préférence benzyle ou triphénylméthyle.

Lorsque T₁, T₂, T₃ ou T₄ représente cycloalkyle, alors cycloalkyle est de préférence cyclopentyle, cyclohexyle ou adamantyle.

Un groupe préféré de complexes de formule 1 est constitué des complexes pour lesquels dans le carbène de formules II, T₃ et T₄ représentent un atome d'hydrogène.

De même, les complexes de formule I dans lesquels T₁ et T₂ sont choisis parmi (C₁-C₈)alkyle et (C₃-C₈)cycloalkyle forment un sous-groupe préféré. Mieux encore, T₁ et T₂ sont identiques et représentent (C₃-C₈)cycloalkyle.

De façon avantageuse, T₁ et T₂, identiques ou différents, représentent (C₁-C₈)alkyle ou (C₃-C₈)cycloalkyle ; ou bien R₃ et R₄, identiques ou différents, représentent (C₁-C₈)alkyle ou (C₃-C₈)cycloalkyle ; ou bien encore T₁, T₂, R₃ et R₄ identiques ou différents, représentent (C₁-C₈)alkyle ou (C₃-C₈)cycloalkyle.

Un groupe particulièrement préféré des complexes métalliques de formule I est constitué des complexes de formule : 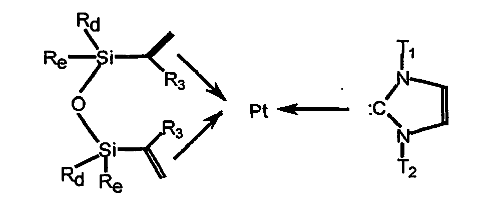 dans laquelle :
- R₃ représente un atome d'hydrogène ; un groupe (C₁-C₈)alkyle ; ou un groupe (C₃-C₈)cycloalkyle éventuellement substitué par (C₁-C₄)alkyle ;
- T₁ et T₂ sont identiques et représentent (C₁-C₈)alkyle ou (C₃-C₈)cycloalkyle ;
- R_{d} et Rₑ sont tels que définis ci-dessus.

D'autres sous-groupes préférés de l'invention sont définis comme suit :
- complexes métalliques de formule I dans lesquels Y₁ et Y_{2,} identiques, représentent SiR_{d}Rₑ ; R₁ = R₂ = R₃ = R₄ = R₅ = R₆ = H ; X = O ; R_{d} et Rₑ sont indépendamment choisis parmi alkyle ; aryle éventuellement substitué par alkyle ; alcényle ; et alcynyle.
- complexes métalliques de formule I dans lesquels Y₁ et Y_{2,} identiques, représentent SiR_{d}Rₑ ; X = O ; R₁ = R₆ ; R₂ = R₅ ; R₃ = R₄ ; R₁ et R₂ représentent indépendamment alkyle ; R₃ représente alkyle ou aryle éventuellement substitué par alkyle ; R_{d} et Rₑ représentent indépendamment alkyle ; alcényle ; alcynyle ; ou aryle éventuellement substitué par alkyle.
- complexes métalliques de formule I dans lesquels Y₁ et Y₂, identiques, représentent SiR_{d}Rₑ ; X = O ; R₁ = R₂ = R₃ = R₄ = R₅ = R₆ = H ; et R_{d} = Rₑ = méthyle ou bien R_{d} = méthyle et Rₑ = phényle.
- complexes métalliques de formule I dans lesquels Y₁ et Y₂, identiques, représentent SiR_{d}Rₑ ; X = O ; R₁ = R₃ = R₄ = R₆ = H ; R₂ = R₅ = alkyle.
- complexes métalliques de formule I dans lesquels Y₁ et Y₂, identiques, représentent SiR_{d}Rₑ ; X = CR_{f}R_{g} ; R_{f} = R_{g} = un atome d'hydrogène ; R_{d} et Rₑ, identiques ou différents, sont choisis parmi alkyle ; et aryle éventuellement substitué par alkyle ; R₁ = R₆ ; R₂ = R₅ ; R₃ = R₄ ; R₁ et R₂ sont choisis parmi un atome d'hydrogène et un groupe alkyle ; R₃ représente un atome d'hydrogène, alkyle ou aryle éventuellement substitué par alkyle.
- complexes métalliques de formule I dans lesquels Y₁ et Y₂, identiques, représentent SiR_{d}Rₑ ; X = CR_{f}R_{g} où R_{f} et R_{g} représentent un atome d'halogène de préférence un atome de chlore ou un atome de brome ; R_{d} = Rₑ = alkyle, de préférence méthyle ; R₁ = R₂ = R₃ = R₄ = R₅ = R₆ = H.
- complexes métalliques de formule I dans lesquels Y₁ et Y₂, identiques, représentent SiR_{d}Rₑ ; X = CR_{f}R_{g} où R_{f} et R_{g} représentent SiG₁G₂G₃ tel que trialkylsilyle (par exemple Si(CH₃)₃) ; R_{d} = Rₑ = alkyle de préférence méthyle; R₁ = R₂ = R₃ = R₄ = R₅ = R₆ = H.
- complexes métalliques de formule I dans lesquels X représente -NRₐ ; Y₁ et Y₂ identiques représentent SiR_{d}Rₑ ; R₁ = R₆ ; R₂ = R₅ ; R₃ = R₄.
- complexes métalliques de formule 1 dans laquelle X représente NRₐ ; Y₁ = Y₂ = SiR_{d}Rₑ; les deux groupes R_{d} forment ensemble la chaîne -NRₐ-(SiRₑR_{d}^{o}-NRₐ)ₙ-
dans laquelle R_{d}^{o} représente -CR₃=CR₁R₂ ; n représente de 1 à 3 ; R₁ = R₆ ; R₂ = R₅ ; et R₃ = R₄.

Les complexes de l'invention sont préparés de façon conventionnelle, par exemple à partir de complexes connus de l'état de la technique par échange de ligand, c'est-à-dire par addition du carbène approprié de formule II à un complexe métallique du métal M, en solution, désigné complexe précurseur.

Des complexes précurseurs appropriés sont le complexe de Karstedt de formule :
* Pt₂[ViMe₂Si-O-SiMe₂Vi]₃ dans laquelle Vi représente le radical vinyle; et plus généralement M₂[R₅R₆C=CR₄-Y₁-X-Y₂-CR₃=CR₁R₂]₃ où M, R₅, R₆, R₄, R₃, R₁, R₂, Y₁, X et Y₂ sont tels que définis auparavant tels que par exemple: M₂[CR₅R₆=CR₄-SiR_{d}Rₑ-O-SiR_{d}Rₑ-CR₃=CR₁R₂]₃ étant entendu que M, R₁, R₂, R₃, R₄, R₅, R₆, R_{d} et Rₑ sont tels que définis ci-dessus;
* Pt(COD)₂ dans lequel COD représente cyclooctadiène et plus généralement M(COD)₂ où M est un métal du groupe 8 ; ou bien
* des complexes métalliques d'oléfine et de bisphosphine.

Les complexes de formule 1 sont généralement préparés à partir de complexes précurseurs présentant, comme ligand, au moins un composé dioléfinique de formule III: 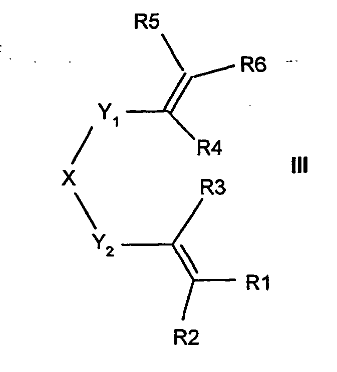 dans laquelle R₁, R₂, R₃, R₄, R₅, R₆, X, Y₁ et Y₂ sont tels que définis ci-dessus pour la formule I.

Ces ligands sont soit disponibles dans le commerce, soit facilement préparés par l'homme du métier à partir de composés commerciaux.

Lorsque X représente NRₐ et Y₁ et Y₂, indépendamment l'un de l'autre, représentent CR_{b}R_{c}, les composés de formule III sont des amines disponibles dans le commerce ou préparés de façon connue en soi à partir de composés disponibles dans le commerce.

Lorsque X représente O et Y représente CR_{b}R_{c,} les composés de formule III sont des éthers. Ces éthers sont disponibles dans le commerce ou préparés de façon connue en soi à partir de composés disponibles dans le commerce.

Les composés de formule III dans lesquels X représente CR_{f}R_{g} et Y représente CR_{b}R_{c} sont des dioléfines facilement accessibles à l'homme du métier par synthèse ou disponibles dans le commerce.

Les composés de formule III dans lesquels X représente NRₐ où Rₐ représente H ou alkyle; R₁ = R₆ ; R₂ = R₅ ; R₃ = R₄ ; et Y₁ = Y₂ = SiR_{d}Rₑ peuvent être préparés par action d'une amine Rₐ-NH₂ avec deux équivalents d'un chlorure de silyle de formule: ClSiR_{d}Rₑ-CR₃=CR₁R₂ dans laquelle Rₑ, R_{d}, R₁, R₂ et R₃ sont tels que définis ci-dessus.

Les composés de formule III dans lesquels X représente NRₐ, Rₐ étant tel que défini ci-dessus à la formule I; Y₁ = Y₂ = SiR_{d}Rₑ où Rₑ est tel que défini ci-dessus à la formule I ; les deux groupes R_{d} forment ensemble la chaîne : -NRₐ-(SiRₑR_{d}^{o}-NRₐ)ₙ- dans laquelle Rₐ et Rₑ sont tels que définis ci-dessus ; n représente un entier de 1 à 3 ; R_{d}° représente -CR₃=CR₁R₂ ; R₁ = R₆ ; R₂ = R₅ et R₃ = R₄, peuvent être préparés par réaction de l'amine Rₐ-NH₂ avec le chlorure de silyle de formule : Cl₂SiRₑ-CR₃=CR₁R₂ dans laquelle Rₑ R₁, R₂ et R₃ sont tels que définis ci-dessus.

Les composés de formule III dans lesquels X représente O, et Y₁ et Y₂ représentent SiR_{d}Rₑ sont des siloxanes linéaires, ramifiés ou cycliques qui sont commercialisés ou dont la préparation est possible à partir de composés commerciaux, par mise en oeuvre des procédés classiques de l'état de la technique. Des exemples de siloxanes de formule III préférés sont ViMe₂SiOSiMe₂Vi et (MeViSiO)_{3,} la seconde formule représentant un cyclosiloxane dans lesquels Vi représente vinyle.

Dans le cas des composés symétriques de formule III, c'est-à-dire ceux pour lesquels R₁ = R₆ ; R₂ = R₅ ; R₃ = R₄ et Y₁ = Y_{2,}l'une des variantes de synthèse suivante pourra être mise en oeuvre.
* (Variante a) : Pour la préparation desdits siloxanes symétriques de formule III pour lesquels R_{1,} R_{2,} R_{3,} R_{d} et Rₑ sont indépendamment choisis parmi alkyle, aryle, alcényle et alcynyle, on peut faire réagir un chlorure de silyle de formule Cl₂SiR_{d}Rₑ avec un composé organométallique de formule :CR₁R₂=CR₃-Mg-Hal où R_{1,} R_{2,} R₃ sont tels que définis ci-dessus et hal représente un atome d'halogène dans les conditions habituelles de réaction mettant en jeu des magnésiens.
* (Variante b) : Pour la préparation desdits siloxanes symétriques de formule III pour lesquels R₁ = R₂ = R₃ = H et R_{c}, R_{d} sont choisis parmi alcényle, alcynyle, aryle et alkyle, on peut faire réagir un chlorure de silyle de formule Cl₂SiR_{d}-CH=CH₂ avec un composé organométallique de formule : Rₑ-Mg-hal dans laquelle Rₑ est tel que défini ci-dessus et hal représente halogène.

Pour la mise en oeuvre de cette variante, l'homme du métier pourra se reporter à J. Gen. Chem., USSR, 1977, 47, 1402-1406.
* (Variante c) : Pour la préparation desdits siloxanes symétriques de formule III dans laquelle R₁ = R₃ = H et R₂ représente alkyle, on peut faire réagir un siloxane de formule : H-SiR_{d}Rₑ-O-SiR_{d}RₑH avec deux équivalents d'un hydrocarbure acétylénique de formule H-C≡C-R₂ dans laquelle R₂ est tel que défini ci-dessus.

Des siloxanes cycliques de formule III sont décrits dans US 4 593 084.

Les composés de formule III dans laquelle X représente CR_{f}R_{g} et Y₁ et Y₂ représentent indépendamment -SiR_{d}Rₑ peuvent être préparés par mise en oeuvre d'un procédé analogue à l'un de ceux décrits dans :
- J. of Organometallic Chemistry, 1996, vol. 521, 99-107 (lequel procédé est plus particulièrement approprié à la préparation des composés symétriques de formule III dans laquelle Y₁= Y₂ ; R_{f} = R_{g} = H ; R_{d,} Rₑ représentent alkyle ou aryle éventuellement substitué par alkyle ; R₃ représente un atome d'hydrogène ; alkyle ; ou aryle éventuellement substitué ; et R_{1,} R₂ sont choisis parmi un atome d'hydrogène et alkyle) ;
- J. of Organometallic Chemistry, 1997, vol. 545-546, 185-189 (lequel procédé est plus particulièrement approprié à la préparation de composés symétriques de formule III dans laquelle Y₁ = Y₂ ; R_{f} = R_{g} = Cl ou Br ; R_{d} et Rₑ représentent alkyle; R₁ = R₂ = R₃ = un atome d'hydrogène) ;
- J. Chem. Soc., Perkin Trans II, 1987, p. 381 (lequel procédé est plus particulièrement approprié à la préparation des composés symétriques de formule III dans laquelle Y₁ = Y₂ ; R_{f} = R_{g} = SiG₁G₂G₃ ; R_{d} et Rₑ représentent alkyle ; R₁ = R₂ = R₃ = un atome d'hydrogène).

Les carbènes de formule II peuvent être préparés par déprotonation de sels d'imidazolium, de sels de tétrazolium, de sels de triazolium, ou de sels de pyrazolium suivant le cas, sous l'action d'une base.

Ces réactions peuvent être schématisées comme suit :

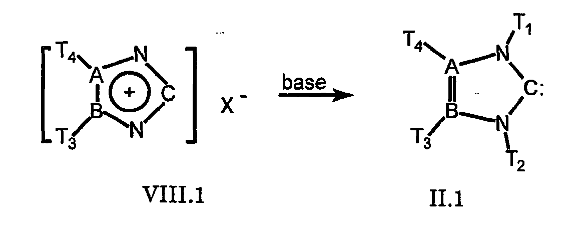

Dans ces schémas réactionnels, T₁, T_{2,} T_{3,} T_{4,} A et B sont tels que définis ci-dessus pour la formule 1 et X⁻ représente un anion.

La nature de l'anion X⁻ n'est pas critique selon l'invention. L'anion X⁻ est l'anion dérivé d'un acide de Brönsted (acide protique) organique ou minéral. Habituellement, l'anion X⁻ est dérivé d'un acide présentant un pKa inférieur à 6. De préférence, X⁻ dérive d'un acide de pKa inférieur à 4, mieux encore inférieur à 2. Les pKa dont il est question ici sont les pKa des acides tels que mesurés dans l'eau.

Des exemples d'acides sont les acides carboxyliques de formule Gₒ-COOH dans laquelle Gₒ représente alkyle, et par exemple (C₁-C₂₂)alkyle ; ou bien aryle, et par exemple (C₆-C₁₈)aryle éventuellement substitué par un ou plusieurs alkyle, de préférence un ou plusieurs (C₁-C₆)alkyle ; les acides sulfoniques de formule Gₒ-SO₃H dans laquelle Gₒ est tel que défini ci-dessus ; et les acides phosphoniques de formule Gₒ-PO₃H dans laquelle Gₒ est tel que défini ci-dessus ; d'autres acides sont HF, HCl, HBr, Hl, H₂SO₄, H₃PO₄ et HClO₄.

Des exemples préférés d'acides carboxyliques sont l'acide acétique, l'acide benzoïque, et l'acide stéarique. A titre d'acide sulfonique préféré, on citera l'acide benzène sulfonique et à titre d'acide phosphonique préféré, on mentionnera l'acide phénylphosphonique.

Selon l'invention, on préfère plus particulièrement les anions X ⁻ dérivés des acides HF, HCl, HBr, Hl, H₂SO₄ et H₃PO₄.

Ainsi, des anions X ⁻ particulièrement préférés, selon l'invention, sont les anions halogénure, sulfate, hydrogénosulfate, phosphate, hydrogénophosphate et dihydrogénophosphate. On peut également mentionner, à titre d'anion, les tétrafluoroborates et hexaphénylphosphate.

Les bases utilisables pour la déprotonation des sels de formule VIII. 1 sont des bases fortes choisies parmi les hydrures de métal alcalin, les hydroxydes de métal alcalin, les carboxylates de métal alcalin, les alcoolates de métal alcalin et les amidures de métal alcalin.

Des exemples de base appropriée sont donc l'hydrure de sodium, l'hydroxyde de potassium, le méthylate de sodium, le tert-butylate de potassium, le diisopropylamidure de lithium et leurs mélanges.

La réaction de déprotonation est de préférence réalisée dans un solvant capable de dissoudre le sel de départ de formule VIII. 1, ainsi que les autres réactifs.

Généralement, la température réactionnelle est comprise entre 40° C et -78° C, préférablement entre 30 et -50° C, mieux encore entre 25 et -40° C, par exemple entre 20 et -30° C.

Des solvants utilisables dans le procédé de préparation des carbènes sont les éthers cycliques ou non, tels que l'éther de diéthyle, l'éther de diisopropyle, le tétrahydrofuranne, le dioxanne, le diméthoxyéthane ou l'éther diméthylique du diéthylèneglycol. D'autres solvants utilisables sont le diméthylsulfoxyde, le diméthylformamide, le diméthylacétamide, l'hexaméthylphosphorylamide: [(CH₃)₂N]₃PO et l'hexaméthylphosphoramide [(CH₃)₂N]₃P.

Les carbènes de formule II dans lesquels A et B représentent tous deux un atome de carbone peuvent également être préparés par réduction des thiones correspondantes de formule IX:

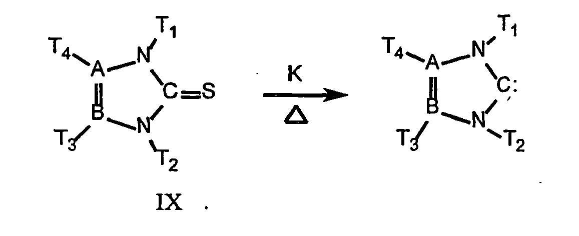

Cette réaction a été décrite par N. Kuhn dans Synthesis, 1993, 561. De préférence, la réduction est conduite dans un solvant du type éther ou amide, tel que défini ci-dessus, à une température comprise entre 50 et 150° C, en présence de potassium.

Les sels de départ de formule (VIII.1) peuvent quant à eux préparés par réaction des imidazoles, pyrazoles, triazoles et tétrazoles correspondants avec un acide approprié.

La nature de l'anion X⁻ dans les sels de formule (VIII.1) dépend de l'acide utilisé à cette étape. Les acides utilisables sont par exemple ceux énumérés ci-dessus et dont dérive X⁻.

Une autre méthode de synthèse des sels de formule (VIII.1) dans laquelle A = B = C est décrite dans US 5 077 414.

Ce procédé comprend la réaction d'un composé (X) α-dicarbonylé de formule : 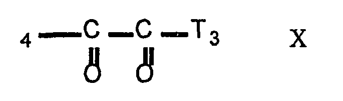 dans laquelle T₃ et T₄ sont tels que définis ci-dessus avec HCHO et deux amines de formules T₁-NH₂ et T₂-NH₂ en présence d'un acide approprié.

D'autres méthodes de préparation des sels de formule (VIII.1) sont proposées dans Chem. Eur. J. 1996, 2, n° 12, pages 1627-1636 et Angew. Chem. Int. Ed. Engl. 1997, 36, 2162-2187.

Les composés de formule (IX) peuvent être préparés par condensation d'une thiourée appropriée de formule (XI) : 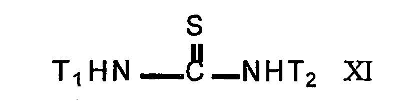 avec une α-hydroxycétone de formule (XII) : 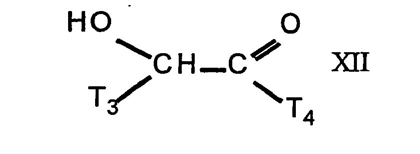 dans lesquelles T_{1,} T_{2,} T₃ et T₄ sont tels que définis ci-dessus. Des conditions opératoires appropriées sont notamment décrites par N. Kuhn dans Synthesis, 1993, 561.

Selon un mode de réalisation particulièrement préféré de l'invention, le complexe métallique de l'invention a pour formule : 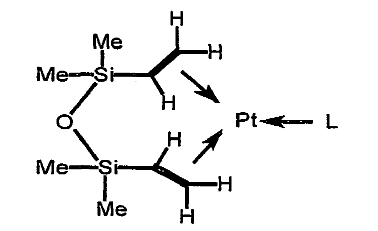 dans laquelle L est tel que défini ci-dessus.

Une méthode simple de préparation de ce complexe consiste à faire réagir le carbène L avec le catalyseur de Karstedt de formule moyenne Pt₂[ViMe₂Si-O-SiMe₂Vi]₃ dans laquelle Vi représente le radical vinyle.

Cette réaction peut être réalisée en masse ou dans un solvant.

Des exemples de solvants appropriés sont les éthers cycliques ou non, tels que l'éther de diéthyle, l'éther de diisopropyle, le tétrahydrofuranne, le dioxanne, le diméthoxyéthane ou l'éther diméthylique de diéthylèneglycol; les amides tels que le diméthylformamide, ou le diméthylacétamide; et les hydrocarbures aromatiques (tels que le toluène, les xylènes et plus particulièrement le toluène).

De façon avantageuse, la réaction est conduite dans un éther, et préférablement dans le tétrahydrofuranne.

La température de réaction varie habituellement entre 10 et 50° C, de préférence entre 15 et 35° C, très préférablement entre 20 et 25° C.

Il est souhaitable d'opérer en présence d'un léger excès de carbène par rapport au platine. Ainsi, le rapport molaire du carbène L au platine varie généralement entre 1 et 1,3, de préférence entre 1 et 1,1.

Une façon simple de procéder consiste à couler, à la température appropriée, une solution du carbène dans un solvant, dans un réacteur contenant une solution du catalyseur de Karstedt dans ce même solvant.

La molarité des solutions du carbène et du catalyseur n'est pas critique selon l'invention.

Les synthons contiennent au moins un cycle hydrocarboné dans lequel est inclus un atome d'oxygène et ont pour formule :
■ (1) 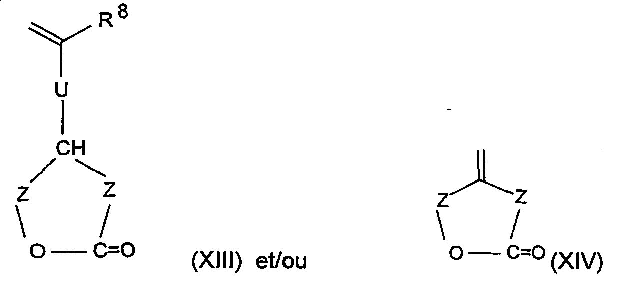 dans lesquelles :
   (i) les symboles **Z**, identiques ou différents, et correspondent à un radical hydrocarboné divalent choisi parmi les radicaux alkylènes linéaires ou ramifiés ayant de 1 à 12 atomes de carbone, un des symboles **Z** pouvant être une valence libre;
   (ii) le symbole **U** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
   (iii) le symbole **R⁸** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (2) 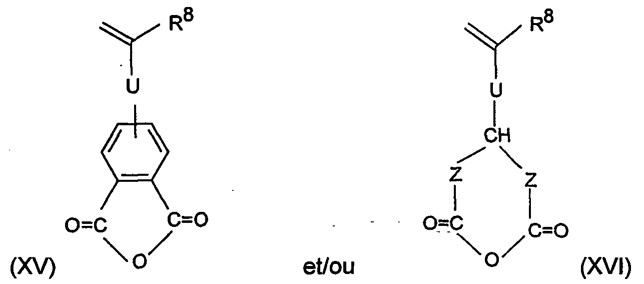 dans lesquelles :
   (i) les symboles **Z**, identiques ou différents, correspondent à un radical hydrocarboné divalent choisi parmi les radicaux alkylènes linéaires ou ramifiés ayant de 1 à 12 atomes de carbone, un des symboles Z pouvant être une valence libre;
   (ii) le symbole **U** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
   (iii) le symbole **R⁸** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ et (3) 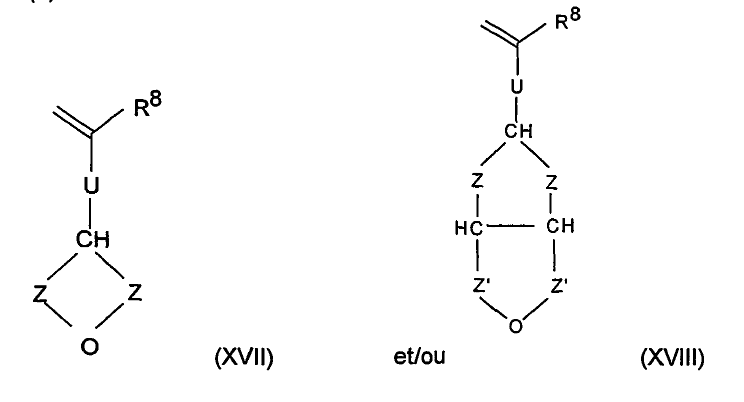 dans lesquelles:
   (i) les symboles **Z**, identiques ou différents, correspondent à un radical hydrocarboné divalent choisi parmi les radicaux alkylènes linéaires ou ramifiés ayant de 1 à 12 atomes de carbone et pouvant contenir au moins une fonction hydroxyle; un des symboles **Z** pouvant être une valence libre pour (XVII) et les deux symboles **Z** peuvent être simultanément une valence libre pour (XVIII) ;
   (ii) les symboles **Z**', identiques ou différents, correspondent à un radical hydrocarboné divalent choisi parmi les radicaux alkylènes linéaires ou ramifiés ayant de 1 à 12 atomes de carbone; au moins un des symboles **Z'** pouvant être une valence libre;
   (iii) le symbole **U** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
   (iv) le symbole **R⁸** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;

De préférence, le cycle hydrocarboné dans lequel est inclus l'atome d'oxygène, comporte au plus 8 atomes dans ledit cycle. De plus, on obtient les meilleurs résultats en accord avec le procédé d'hydrosilylation de l'invention avec des synthons ne contenant qu'un cycle hydrocarboné dans lequel est inclus un atome d'oxygène. En particulier, les synthons utilisés et donnant de bons résultats (voir exemples ci-dessous) ont pour formule :

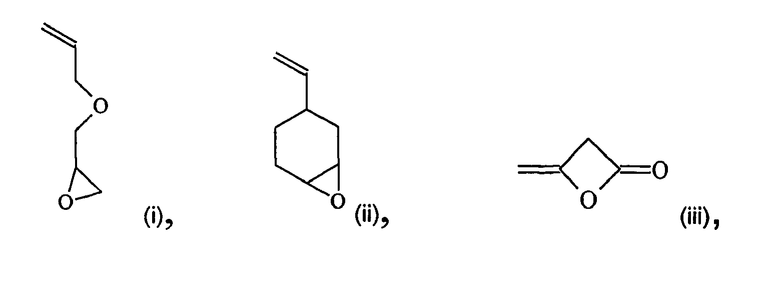

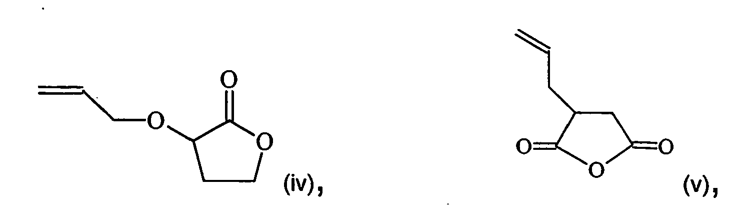

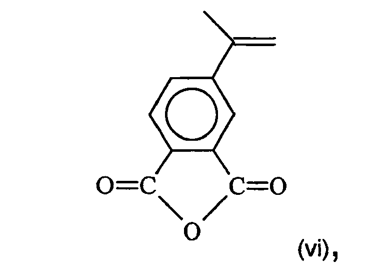

En général, les synthons réagissant avec le polyorganohydrogénosiloxane sont des synthons identiques. Le rapport molaire du polyorganohydrogénosiloxane/synthons est compris entre 0,01 et 100, de préférence entre 0,1 et 10.

Les polyorganohydrogénosiloxanes utilisés dans les procédés selon l'invention sont de nature très diverse. Ces polyorganohydrogénosiloxanes peuvent être linéaires ou cycliques et ont pour formules moyennes : 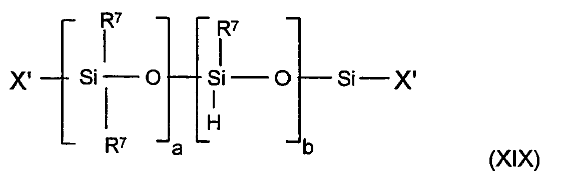 et/ou 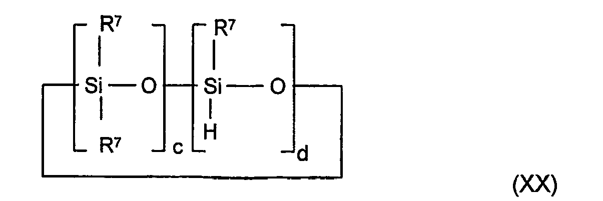 dans lesquelles :
■ les symboles **R⁷** sont identiques ou différents et correspondent à un radical hydrocarboné monovalent choisi parmi le radical phényle et les radicaux alkyles linéaires ou ramifiés ayant de 1 à 6 atomes de carbone, de préférence 1 à 3 atomes de carbone;
■ les symboles **X'** sont identiques ou différents et correspondent à un radical monovalent choisi parmi **R⁷**, un atome d'hydrogène, un radical méthoxy, et un radical éthoxy;
■ a et b sont des nombres entiers ou fractionnaires, tels que :
   - 0 < a ≤ 200, de préférence 0 < a ≤ 99
   - 0 ≤ b ≤ 200, de préférence 1 < b ≤ 100, et au moins un des deux X correspondant au radical hydrogène si b = 0;
   - 5 < a+b ≤ 200, de préférence 10 < a+b ≤ 100
■ c et d sont des nombres entiers ou fractionnaires, tels que
   - 0 < c < 5, de préférence 0 < c < 3
   - 1 < d < 10, de préférence 1 < d < 5,
   - 3 < a+b < 10, de préférence 3 < a+b < 5

Le procédé selon l'invention peut être mis en oeuvre selon diverses variantes. A titre d'exemple, il est possible d'utiliser une première mise en oeuvre dans laquelle l'ensemble des réactifs et de la composition catalytique sont mélangés dans le milieu réactionnel (type "batch").

Dans le cadre de ses essais expérimentaux, la Demanderesse a mis au point un procédé avantageux en accord avec la première mise en oeuvre. Ce procédé d'hydrosilylation entre un polyorganohydrogénosiloxane et un synthon insaturé comporte les étapes suivantes :
(a) une quantité de 5 à 5000 ppm, de préférence de 10 à 100 ppm, de complexe métallique catalytique par rapport à la masse totale des réactifs est introduite sous gaz inerte dans le milieu réactionnel;
(b) le synthon est introduit dans le milieu réactionnel;
(c) ledit milieu est chauffé à une température comprise entre 25°C et 200°C, et de préférence entre 50°C et 160°C;
(d) le polyorganohydrogénosiloxane est ensuite introduit sur une durée comprise 0 et 24 heures, de préférence entre 2,5 et 5 heures; le rapport molaire synthon/silicone étant compris entre 1 et 1,10.
(e) l'huile silicone fonctionnalisée est finalement dévolatilisée.

Ce procédé avantageux peut être effectué en masse, ce qui signifie que la réaction entre le polyorganohydrogénosiloxane et le synthon s'effectue en l'absence de solvant. Toutefois, de nombreux solvants tels que le toluène, le xylène, l'octaméthyltétrasiloxane, le cyclohexane ou l'hexane peuvent être utilisés.

Les hétérocycles des huiles obtenues ne sont quasiment pas polymérisés après hydrosilylation.

Il est à noter que les huiles préparées en accord avec les procédés selon l'invention présentent des niveaux moins élevés de coloration et de turbidité que celles préparées à partir des mêmes matières premières en utilisant un catalyseur de type Karstedt.. Dans des cas particuliers, les huiles obtenues selon l'invention sont non turbides et/ou non colorés. Dans le cadre de notre invention, on entend par coloration nulle une coloration inférieure à 90 Hazen et de préférence inférieure à 40 Hazen. En ce qui concerne la turbidité, les huiles sont non turbides lorsque leur turbidité est inférieure à 1 NTU et/ou ne présentent plus que des traces minimes de turbidité.

Le taux d'époxy dosé des huiles obtenues selon l'invention est très élevé et le rapport taux d'époxy dosé/ taux d'époxy théorique est compris entre 0,95 et 1, ce taux d'époxy théorique correspondant au taux de ≡SiH dosé sur le polyorganohydrogénosiloxane avant réaction. Ceci démontre que le procédé permet d'obtenir un produit dont la viscosité est maîtrisée (absence de phénomène de gélification due aux fonctions époxy).

Les huiles silicones selon l'invention du fait de leurs propriétés sont donc employées comme additif (par exemple, à titre de diluant) ou comme composant principal (par exemple, à titre de résine) pour la préparation de compositions réticulables mise en oeuvre pour préparer des encres, des vernis et/ou des revêtements transparents et incolores. En général, ces compositions réticulables comprennent un photoamorceur, une résine organique et/ou silicone à fonctionnalité époxy et/ou acrylate; en outre, ces compositions peuvent comprendre un diluant et/ou un solvant. Ces compositions sont réticulables selon les cas, par exemple sous rayonnement U.V et/ou sous faisceau d'électrons.

### EXEMPLES

Les exemples ci-dessous illustrent la préparation d'huiles silicones fonctionnalisées obtenues selon le procédé de la présente invention.

### 1. Préparation du complexe métallique catalytique.

Le catalyseur de formule (XXI) est préparé à partir du catalyseur de Karsted et d'une solution de carbène synthétisée selon un protocole opératoire basé sur ceux décrits dans le document *"*Heterocyclic carbenes: a high yielding synthesis of novel, functionalized N-heterocyclic carbenes in liquid ammonia", de W.A. Hermann et al., Chem. Eur. Journal. 1996, 2, page 1627.

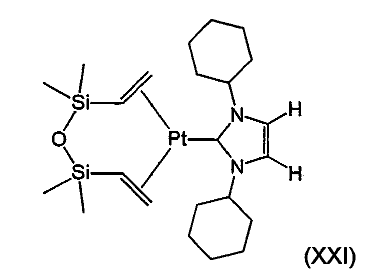

Le dosage des fonctions époxydes est réalisé par potentiométrie. L'appareil utilisé est de marque Mettler, modèle DL21, équipé d'une électrode combinée Mettler Toledo DG 113 SC LiCI/EtOH 1,0M. La solution titrante est une solution d'acide perchlorique 0,1 N dans l'acide acétique.

La concentration en platine est calculée par rapport à la masse totale du mélange alcène + huile SiH stoechiométrique.

### 2. Préparation d'huile silicone époxydée avec complexe catalytique (XXI)

21,48 g (173 mmol) de 4-vinylcyclohexèneoxyde (VCMX) sont placés dans un réacteur de 100 mL. Le mélange réactionnel est chauffé à 70°C sous agitation.

20 µL (10 ppm) d'une solution du complexe métallique catalytique (XXI) à 2,68 % en platine dans le toluène sont ajoutés dans le réacteur et 35 g (157,3 mmol) d'heptaméthylhydrogénotrisiloxane sont ensuite coulés goutte à goutte en 3 heures sur le VCMX.

Au bout de 5 heures de réaction, le taux de transformation des motifs SiH est de 99,5% et 0,5 % des fonctions époxydes ont disparu. Au bout de 7 heures de réaction, le taux de transformation des motifs SiH est de 99,8% et 1 % des fonctions époxydes ont disparu. La viscosité du brut de réaction à 25°C est mesurée : v = 6 mPa/s.

### 3. Contre-exemple: préparation d'huile silicone époxydée avec catalyseur de Karsted.

21,48 g (173 mmol) de 4-vinylcyclohexèneoxyde (VCMX) sont placés dans un réacteur de 100 mL. Le mélange réactionnel est chauffé à 70°C sous agitation. 5,5 µL (10 ppm) d'une solution de catalyseur de Karstedt à 10% en platine sont ajoutés dans le réacteur et 35 g (157,3 mmol) d'heptaméthylthylhydrogénosiloxane sont ensuite coulés goutte à goutte en 3 heures sur le VCMX.

Au bout de 5 heures de réaction, le taux de transformation des motifs SiH est de 99% mais 12 % des fonctions époxydes ont disparu. Au bout de 7 heures de réaction, le taux de transformation des motifs SiH est de 99,3% et 23 % des fonctions époxydes ont disparu. La viscosité du brut de réaction à 25°C est mesurée : v = 38 mPa/s.

La valeur de viscosité de l'huile de l'exemple 3 est 6 fois plus élevée que celle de l'exemple 2; ce qui signifie qu'une partie des fonctions époxydes présentes dans le mileu ont polymérisées au cours de la réaction d'hydrosilylation en présence du catalyseur de Karstedt.

### 4. Préparation d'huile silicone époxydée avec complexe catalytique (XXI).

6,5 g (52,3 mmol) de 4-vinylcyclohexèneoxyde (VCMX) sont placés dans un réacteur de 100 mL. Le mélange réactionnel est chauffé à 70°C sous agitation.

15,2 µL (10 ppm de Pt) d'une solution du complexe métallique catalytique (XXII) à 2,68 % en platine dans le toluène sont ajoutés dans le réacteur et 45 g (47,6 mmol) du polyhydrogénosiloxane de formule (XXII) donnée ci-dessous sont ensuite coulés goutte à goutte en 3 heures sur le VCMX.

Me₃SiO-(Me₂SiO)₈₀-(MeHSiO)₇-SiMe₃ (XXII)

Au bout de 7 heures de réaction, le taux de transformation des motifs SiH est de 99,7%. La réaction est alors stoppée. Après addition de 2,2 mg (60 ppm) de thiodiéthanol, le mélange réactionnel est dévolatilisé sous vide. La viscosité du produit après dévolatilisation est mesurée à 25°C : v = 325 mPa/s.

### 5. Contre-exemple: préparation d'huile silicone époxydée avec catalyseur de Karsted.

6,5 g (52,3 mmol) de 4-vinylcyclohexèneoxyde (VCMX) sont placés dans un réacteur de 100 mL. Le mélange réactionnel est chauffé à 70°C sous agitation. 5,1 µL (10 ppm de Pt) d'une solution de catalyseur de Karstedt à 10% en platine sont ajoutés dans le réacteur et 45 g (47,6 mmol) du polyhydrogénosiloxane de formule (XXII) sont ensuite coulés goutte à goutte en 3 heures sur le VCMX.

Au bout de 5 heures de réaction, le taux de transformation des motifs SiH est de 99,9%. La réaction est alors stoppée. Après addition de 2,2 mg (60 ppm) de thiodiéthanol, le mélange réactionnel est dévolatilisé sous vide. La viscosité du produit après dévolatilisation est mesurée à 25°C: v = 1700 mPa/s.

La valeur de viscosité de l'huile de l'exemple 5 est 5 à 6 fois plus élevée que celle de l'exemple 4; ce qui signifie qu'une partie des fonctions époxydes présentes dans le milieu ont polymérisé au cours de la synthèse en présence du catalyseur de Karstedt.

## Revendications

1. Procédé d'hydrosilylation de synthons avec au moins un polyorganohydrogénosiloxane, **caractérisé en ce que** les synthons hydrosilylés avec le polyorganohydrogénosiloxane, différents ou identiques, comprennent au moins un cycle hydrocarboné dans lequel est inclus un atome d'oxygène, ladite réaction étant effectuée en présence d'un complexe métallique catalytique de formule I : 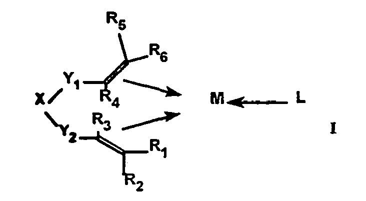 dans laquelle :
• M représente un métal à rétat d'oxydation 0 choisi parmi les métaux du groupe 8 du tableau périodique tel que publié dans Handbook of Chemistry and Physics, 65^{ème} édition, 1984-1985 :
• X représente O, NRₐ et/ou CR_{f}R_{g} ;
• Y₁ et Y₂, identiques et/ou différents, représentent CR_{b}R_{c} et/ou SiR_{d}Rₑ ;
• R₁, R₂, R₅ et R₆, identiques ou différents, sont choisis parmi un atome d'hydrogène, un groupe alkyle et/ou un groupe aryle éventuellement substitué par alkyle ;
• R₃, R₄, Rₐ, R_{b}, R_{c}, identiques et/ou différents, sont choisis parmi un atome d'hydrogène; un groupe alkyle; un groupe acyle; un groupe aryle éventuellement substitué par un alkyle; un cycloalkyle éventuellement substitué par un alkyle; et un groupe arylalkyle dans lequel la partie aryle est éventuellement substitué par alkyle ;
• R_{d} et Rₑ, identiques et/ou différents, sont choisis parmi un groupe alcényle ; un groupe alcynyle ; un groupe alkyle; un groupe alcoxy; un groupe acyle; un groupe aryle éventuellement substitué par un alkyle; un groupe cycloalkyle éventuellement substitué par un alkyle; et un groupe arylalkyle dans lequel la partie aryle est éventuellement substituée par alkyle ; ou bien
• lorsque Y₁ et Y₂, identiques et/ou différents, représentent SiR_{d}Rₑ, deux groupes R_{d} liés à deux atomes de silicium distincts forment ensemble
* une chaîne de formule : 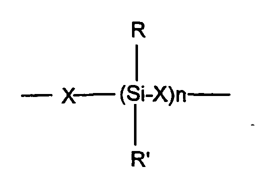 dans laquelle n est un entier de 1 à 3 ; X est tel que défini ci-dessus ; R et R', identiques ou différents, prennent l'une quelconque des significations données ci-dessus pour Rₑ, étant entendu que, lorsque n est 2 ou 3, un seul atome de silicium de ladite chaîne peut être substitué par un ou deux groupes alcényle ou alcynyle ;
* une chaîne hydrocarbonée saturée, les deux groupes R_{d} ensemble avec lesdits atomes de silicium et X formant un cycle de 6 à 10 chaînons; ou bien,
• lorsque Y₁ et Y₂ , identiques et/ou différents, représentent CR_{b}R_{c}, deux groupes R_{b} liés à des atomes de carbone distincts forment ensemble une chaîne hydrocarbonée saturée, les deux groupes R_{b} ensemble avec les atomes de carbone qui les portent et X formant un cycle de 6 à 10 chaînons ;
• R_{f} et R_{g} représentent indépendamment l'un de l'autre un atome d'hydrogène ; un groupe alkyle; un groupe acyle; un groupe aryle éventuellement substitué par alkyle; un groupe cycloalkyle éventuellement substitué par alkyle; un groupe arylalkyle dans lequel la partie aryle est éventuellement substituée par un alkyle; un atome d'halogène; un groupe alcényle; un groupe alcynyle; ou un groupe SiG₁G₂G₃ où G₁, G₂ et G₃ sont indépendamment l'un de l'autre un alkyle; un alkoxy; un aryle éventuellement substitué par un alkyle ou un alkoxy; ou un arylalkyle dans lequel la partie aryle est éventuellement substituée par un alkyle ou un alkoxy ;
• L représente un carbène de formule II: 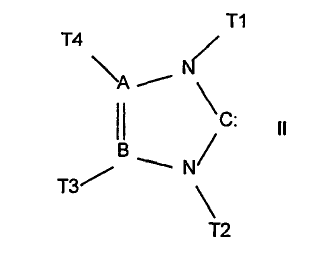
dans laquelle :
- A et B, identiques et/ou différents, représentent C ou N, étant entendu que lorsque A représente N, alors T₄ ne représente rien et lorsque B représente N, alors T₃ ne représente rien ;
- T₃ et T_{4,} identiques et/ou différents, représentent un atome d'hydrogène; un groupe alkyle; un groupe cycloalkyle éventuellement substitué par un alkyle ou un alkoxy; un groupe aryle éventuellement substitué par un alkyle ou un alkoxy; un groupe alcényle ; un groupe alcynyle ; ou un groupe arylalkyle dans lequel la partie aryle est éventuellement substituée par alkyle ou alkoxy;
- T₁ et T₂, identiques et/ou différents, représentent (i) un groupe alkyle ; (i) un groupe alkyle perfluoré ou éventuellement substitué par un groupe perfluoroalkyle ; (iii) un groupe cycloalkyle éventuellement substitué par un groupe alkyle ou alkoxy ; (iv) un groupe aryle éventuellement substitué par un groupe alkyle ou alkoxy ; (v) un groupe alcényle ; (vi) un groupe alcynyle; ou (vi) un groupe arylalkyle dans lequel la partie aryle est éventuellement substituée par un groupe alkyle ou alkoxy ;
- ou bien T₁ et T₂, identiques et/ou différents, représentent un radical monovalent de formule (V) suivante :
-V₁-V₂ (V)
dans laquelle :
• V₁ est un radical divalent hydrocarboné, de préférence un alkylène linéaire ou ramifié en C₁-C₁₀, éventuellement substitué,
• V₂ est un radical monovalent choisi dans le groupe des substituants suivants :
◆ alcoxy, -OR^{ν} avec R^{ν} correspondant à hydrogène, alkyle, aryle
◆ amine, de préférence N(R^{ν})₂ avec R^{ν} correspondant à hydrogène, alkyle, aryle, ou bien encore,
- T₁ et T₂ représentent indépendamment un radical monovalent de formule (W) suivante :
-W₁-ω-W₂ (W)
dans laquelle :
• W₁ est un radical divalent hydrocarboné, de préférence un alkylène linéaire ou ramifié en C₁-C_{10,} éventuellement substitué,
• ω représente :
- R^{α}C = CR^{α}- , avec R^{α} correspondant à H ou un groupement alkyle
ou
-C≡C-
• W₂ est un radical monovalent choisi dans le groupe des substituants suivants :
◆ R^{β} = alkyle, H ;
◆ Si-alkyle ou Si-alcoxy, de préférence
-Si(R^{δ})₃ avec R^{δ}= alkyle ;
◆ alcool, de préférence -C(R^{ε})₂OH avec R^{ε} = OH, H ou alkyle
◆ cétone, de préférence 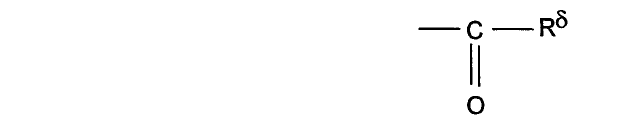 avec R^{δ} = alkyle ; alcényle, alcynyle ;
◆ carboxy, de préférence 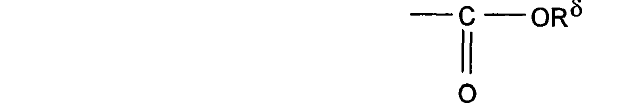 avec R^{δ} = alkyle ; alcényle, alcynyle ;
◆ amide, de préférence 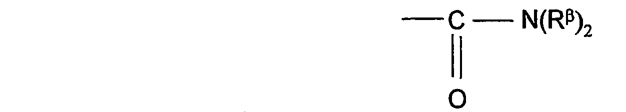 avec R^{β} = H, alkyle; alcényle, alcynyle ;
◆ acyle, de préférence 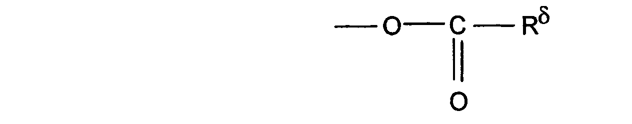 avec R^{δ} = alkyle ; alcényle, alcynyle ;
- ou bien encore, les substituants T₁, T₂, T₃ et T₄, peuvent former deux à deux, lorsqu'ils sont situés sur deux sommets adjacents dans la formule II une chaîne hydrocarbonée saturée ou insaturée.

2. Procédé selon la revendication selon la revendication 1, dans lequel X représente O ; Y₁ et Y₂ représentent indépendamment l'un de l'autre SiR_{d}Rₑ.

3. Procédé selon l'une quelconque des revendications précédentes, **caractérisé en ce que** R₁, R₂, R₅ et R₆ sont des atomes d'hydrogène.

4. Procédé selon l'une quelconque des revendications précédentes, **caractérisé en ce que** R₃ et R₄ représentent un atome d'hydrogène; un groupe alkyle; aryle éventuellement substitué par alkyle; ou cycloalkyle éventuellement substitué par alkyle.

5. Procédé selon l'une quelconque des revendications précédentes, **caractérisé en ce que** A et B représentent tous deux un atome de carbone.

6. Procédé selon l'une quelconque des revendications précédentes, **caractérisé en ce que** T₃ et T₄ représentent un atome d'hydrogène.

7. Procédé selon l'une quelconque des revendications précédentes, **caractérisé en ce que** T₁ et T₂, identiques et/ou différents, représentent (C₁-C₈)alkyle ou (C₃-C₈)cycloalkyle ; ou bien R₃ et R₄, identiques et/ou différents, représentent (C₁-C₈)alkyle ou (C₃-C₈)cycloalkyle ; ou bien encore T₁, T₂, R₃ et R₄, identiques et/ou différents, représentent (C₁-C₈)alkyle ou (C₃-C₈)cycloalkyle.

8. Procédé selon l'une quelconque des revendications précédentes, **caractérisé en ce que** M est un métal choisi parmi Pt, Pd et Ni.

9. Procédé selon l'une quelconque des revendications précédentes, **caractérisé en ce que** M est le platine à l'état d'oxydation 0.

10. Procédé selon l'une quelconque des revendications précédentes **caractérisé en ce que** le complexe métallique est de formule : 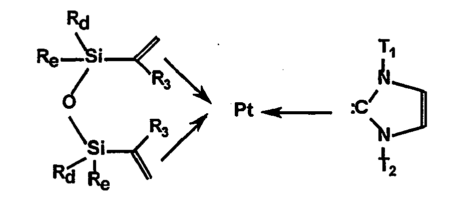 dans laquelle :
- R₃ représente un atome d'hydrogène ; un groupe (C₁-C₈)alkyle ; ou un groupe (C₃-C₈)cycloalkyle éventuellement substitué par (C₁-C₄)alkyle ;
- T₁ et T₂ sont identiques et représentent (C₁-C₈)alkyle ou (C₃-C₈)cycloalkyle ;
- et R_{d} et Rₑ sont tels que définis à la revendication 1.

11. Procédé selon l'une quelconque des revendications précédentes, **caractérisé en ce que** les synthons contiennent un cycle hydrocarboné dans lequel est inclus un atome d'oxygène.

12. Procédé selon la revendication précédente, **caractérisé en ce que** les synthons contiennent au moins un cycle hydrocarboné dans lequel est inclus un atome d'oxygène, les synthons ayant pour formule :
■ (1) 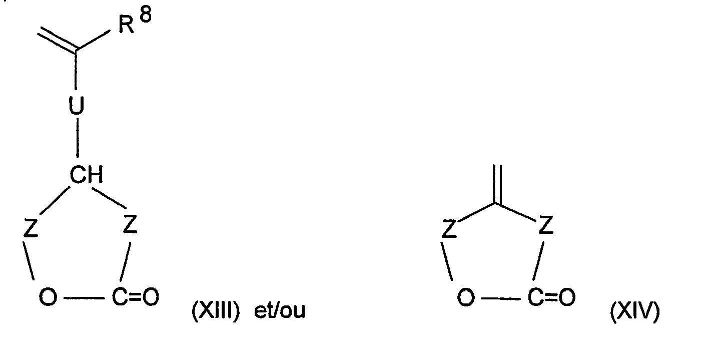 dans lesquelles :
(i) les symboles **Z**, identiques et/ou différents, et correspondent à un radical hydrocarboné divalent choisi parmi les radicaux alkylènes linéaires ou ramifiés ayant de 1 à 12 atomes de carbone, un des symboles Z pouvant être une valence libre;
(ii) le symbole **U** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
(iii) le symbole **R⁸** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ (2) 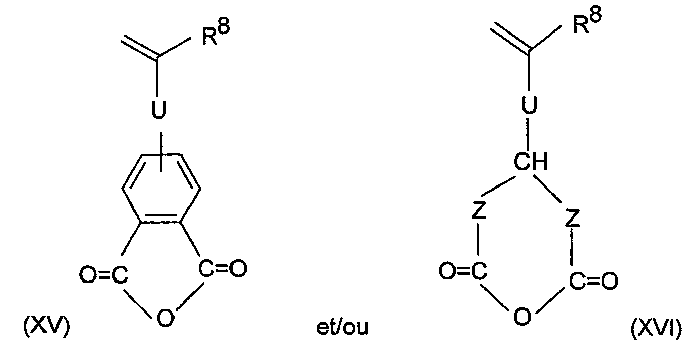 dans lesquelles :
(i) les symboles **Z**, identiques et/ou différents, correspondent à un radical hydrocarboné divalent choisi parmi les radicaux alkylènes linéaires ou ramifiés ayant de 1 à 12 atomes de carbone, un des symboles **Z** pouvant être une valence libre;
(ii) le symbole **U** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
(iii) le symbole **R⁸** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;
■ et (3) 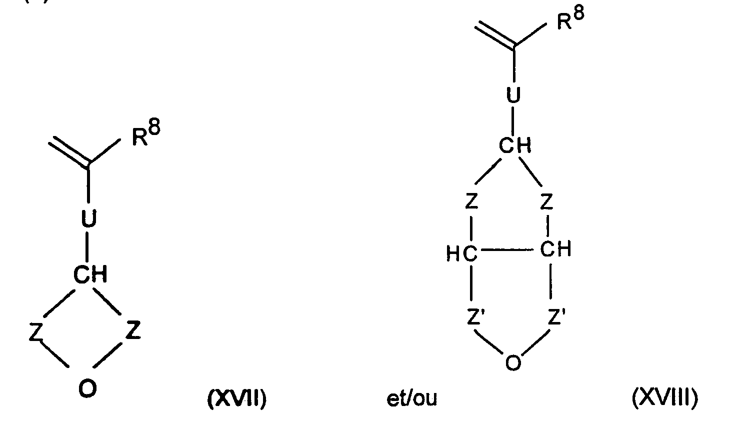 dans lesquelles :
(i) les symboles **Z**, identiques et/ou différents, correspondent à un radical hydrocarboné divalent choisi parmi les radicaux alkylènes linéaires ou ramifiés ayant de 1 à 12 atomes de carbone et pouvant contenir au moins une fonction hydroxyle; un des symboles **Z** pouvant être une valence libre pour (XVII) et les deux symboles **Z** peuvent être simultanément une valence libre pour (XVIII) ;
(ii) les symboles **Z**', identiques et/ou différents, correspondent à un radical hydrocarboné divalent choisi parmi les radicaux alkylènes linéaires ou ramifiés ayant de 1 à 12 atomes de carbone; au moins un des symboles **Z**' pouvant être une valence libre;
(iii) le symbole **U** correspond à une valence libre ou un radical divalent choisi parmi les radicaux alkylènes linéaires ou ramifiés ayant de 1 à 12 atomes de carbone et pouvant contenir un hétéroatome, de préférence un atome d'oxygène;
(iv) le symbole **R⁸** correspond à un atome d'hydrogène ou radical hydrocarboné monovalent choisi parmi les radicaux alkyles linéaires ou ramifiés ayant de 1 à 12 atomes de carbone, et de préférence, un atome d'hydrogène ou un radical méthyle;

13. Procédé selon la revendication 12 **caractérisé en ce que** le cycle hydrocarboné des synthons comporte au plus 8 atomes dans ledit cycle.

14. Procédé d'hydrosilylation selon l'une quelconque des revendications précédentes, **caractérisé en ce que** l'huile silicone est linéaire ou cyclique et de formules moyennes : 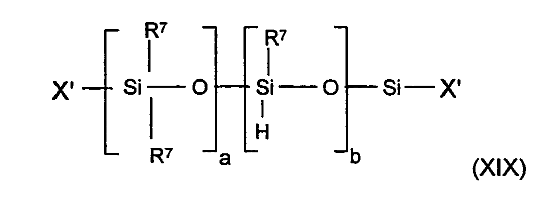 et/ou 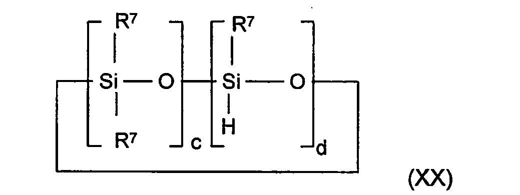 dans lesquelles :
■ les symboles **R⁷**, identiques et/ou différents, correspondent à un radical hydrocarboné monovalent choisi parmi le radical phényle et les radicaux alkyles linéaires ou ramifiés ayant de 1 à 6 atomes de carbone;
■ les symboles **X'**, identiques et/ou différents, correspondent à un radical monovalent choisi parmi **R⁷**, un atome d'hydrogène, un radical méthoxy, et un radical éthoxy;
■ a et b sont des nombres entiers ou fractionnaires, tels que :
- 0 < a ≤ 200, de préférence 0 < a≤ 99
- 0 ≤ b ≤ 200, de préférence 1 < b ≤ 100, et au moins un des deux X correspondant au radical hydrogène si b = 0;
- 5 < a+b ≤ 200, de préférence 10 < a+b ≤ 100
■ c et d sont des nombres entiers ou fractionnaires, tels que :
- 0 < c <5, de préférence 0 < c < 3
- 1 < d < 10, de préférence 1 < d < 5,
- 3 < a+b < 10, de préférence 3 < a+b < 5

15. Utilisation d'une huile silicone susceptible d'être obtenue par le procédé selon l'une des revendications 1 à 14 pour la préparation de produits anti-adhérants pour papier, verre ou plastique

## Claims

1. Method of hydrosilylation of synthons with at least one polyorganohydrosiloxane, **characterized in that** the synthons hydrosilylated with the polyorganohydrosiloxane, which may be different or identical, comprise at least one hydrocarbon ring in which is included an oxygen atom, said reaction being carried out in the presence of a catalytic metal complex of formula I: 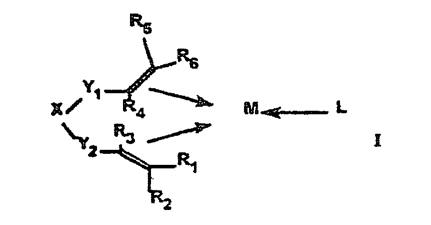 in which:
• M represents a metal in the 0 oxidation state chosen from the metals of group 8 of the Periodic Table as published in Handbook of Chemistry and Physics, 65th edition, 1984-1985;
• X represents 0, NRₐ and/or CR_{f}R_{g};
• Y₁ and Y_{2,} which may be identical and/or different, represent CR_{b}R_{c} and/or SiR_{d}Rₑ;
• R_{1,} R_{2,} R₅ and R₆, which may be identical or different, are chosen from a hydrogen atom, an alkyl group and/or an aryl group optionally substituted with alkyl;
• R₃, R₄, Rₐ, R_{b}, R_{c}, which may be identical and/or different, are chosen from a hydrogen atom; an alkyl group; an acyl group; an aryl group optionally substituted with an alkyl; a cycloalkyl optionally substituted with an alkyl; and an arylalkyl group in which the aryl component is optionally substituted with alkyl;
• R_{d} and Rₑ, which may be identical and/or different, are chosen from an alkenyl group; an alkynyl group; an alkyl group; an alkoxy group; an acyl group; an aryl group optionally substituted with an alkyl; a cycloalkyl group optionally substituted with an alkyl; and an arylalkyl group in which the aryl component is optionally substituted with alkyl; or else
• when Y₁ and Y₂, which may be identical and/or different, represent SiR_{d}Rₑ, two groups R_{d} linked to two different silicon atoms together form:
* a chain of formula: 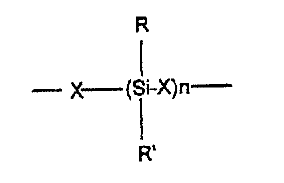 in which n is an integer from 1 to 3; X is as defined above; R and R', which may be identical or different, take any one of the meanings given above for Rₑ, it being understood that, when n is 2 or 3, a single silicon atom of said chain can be substituted with one or two alkenyl or alkynyl groups;
* a saturated hydrocarbon chain, the two groups R_{d} together with said silicon atoms and X forming a 6- to 10-membered ring; or else,
• when Y₁ and Y₂, which may be identical and/or different, represent CR_{b}R_{c}, two groups R_{b} linked to different carbon atoms together form a saturated hydrocarbon chain, the two groups R_{b} together with the carbon atoms which bear them and X forming a 6- to 10-membered ring;
• R_{f} and R_{g} represent, independently of one another, a hydrogen atom; an alkyl group; an acyl group; an aryl group optionally substituted with alkyl; a cycloalkyl group optionally substituted with alkyl; an arylalkyl group in which the aryl component is optionally substituted with an alkyl; a halogen atom; an alkenyl group; an alkynyl group; or a group SiG₁G₂G₃ in which G₁, G₂ and G₃ are, independently of one another, an alkyl; an alkoxy; an aryl optionally substituted with an alkyl or an alkoxy; or an arylalkyl in which the aryl component is optionally substituted with an alkyl or an alkoxy;
• L represents a carbene of formula II: 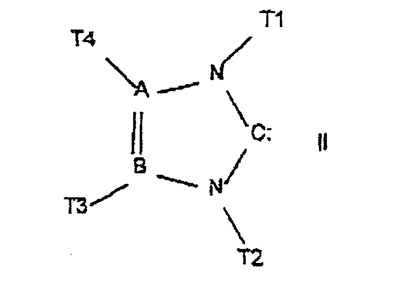
in which:
- A and B, which may be identical and/or different, represent C or N, it being understood that, when A represents N, then T₄ represents nothing and when B represents N, then T₃ represents nothing;
- T₃ and T₄, which may be identical and/or different, represent a hydrogen atom; an alkyl group; a cycloalkyl group optionally substituted with an alkyl or an alkoxy; an aryl group optionally substituted with an alkyl or an alkoxy; an alkenyl group; an alkynyl group; or an arylalkyl group in which the aryl component is optionally substituted with alkyl or alkoxy;
- T₁ and T₂, which may be identical and/or different, represent (i) an alkyl group; (ii) a perfluorinated alkyl group or an alkyl group optionally substituted with a perfluoroalkyl group; (iii) a cycloalkyl group optionally substituted with an alkyl or alkoxy group; (iv) an aryl group optionally substituted with an alkyl or alkoxy group; (v) an alkenyl group; (vi) an alkynyl group; or (vii) an arylalkyl group in which the aryl component is optionally substituted with an alkyl or alkoxy group;
- or else T₁ and T₂, which may be identical and/or different, represent a monovalent radical of formula (V) below:
-V₁-V₂ (V)
in which:
• V₁ is a divalent hydrocarbon radical, preferably an optionally substituted linear or branched C₁-C₁₀ alkylene,
• V₂ is a monovalent radical chosen from the group of the following substituents:
◆ alkoxy, -OR^{υ} with R^{υ} corresponding to hydrogen, alkyl, aryl,
◆ amine, preferably N(R^{υ})₂ with R^{υ} corresponding to hydrogen, alkyl, aryl, or else alternatively,
- T₁ and T₂, independently represent a monovalent radical of formula (W) below:
-W₁-ω-W₂ (W)
in which:
• W₁ is a divalent hydrocarbon radical, preferably an optionally substituted linear or branched C₁-C₁₀ alkylene,
• ω represents:
-R^{α}C=CR^{α}-, with R^{α} corresponding to H or an alkyl group or
-C=C-
• W₂ is a monovalent radical chosen from the group of the following substituents:
◆ R^{β} = alkyl, H;
◆ Si-alkyl or Si-alkoxy, preferably -Si(R^{δ})₃ with R^{δ} = alkyl;
◆ alcohol, preferably -C(R^{ε})₂OH with R^{ε} = OH, H or alkyl;
◆ ketone, preferably 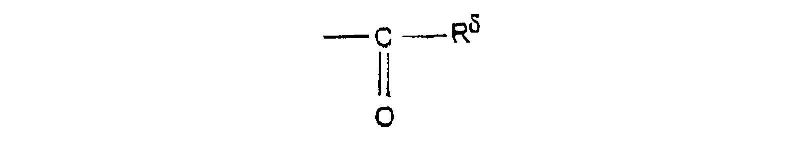 with R^{δ} = alkyl, alkenyl, alkynyl;
◆ carboxy, preferably 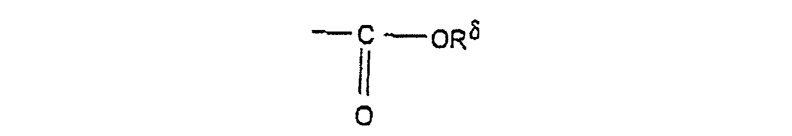 with R^{δ} = alkyl, alkenyl, alkynyl;
◆ amide, preferably 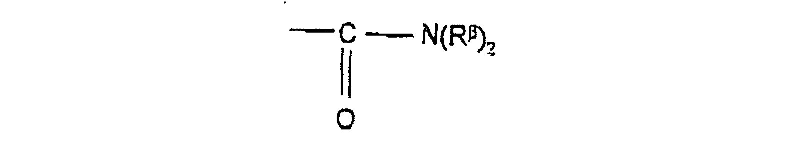 with R^{β} = H, alkyl, alkenyl, alkynyl;
◆ acyl, preferably 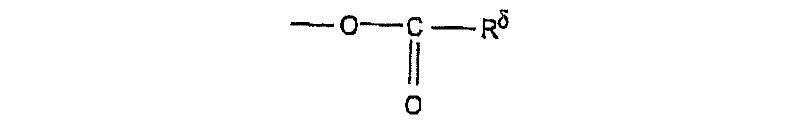
with R^{δ} = alkyl, alkenyl, alkynyl;
- or else alternatively the substituents T₁, T₂, T₃ and T₄ can form, in pairs, when they are located at two adjacent points in formula II, a saturated or unsaturated hydrocarbon chain.

2. Method according to Claim 1, in which X represents O; Y₁ and Y₂ represent, independently of one another, SiR_{d}Rₑ.

3. Method according to any one of the preceding claims, **characterized in that** R₁, R₂, R₅ and R₆ are hydrogen atoms.

4. Method according to any one of the preceding claims, **characterized in that** R₃ and R₄ represent a hydrogen atom; an alkyl group; aryl optionally substituted with alkyl; or cycloalkyl optionally substituted with alkyl.

5. Method according to any one of the preceding claims, **characterized in that** A and B both represent a carbon atom.

6. Method according to any one of the preceding claims, **characterized in that** T₃ and T₄ represent a hydrogen atom.

7. Method according to any one of the preceding claims, **characterized in that** T₁ and T₂, which may be identical and/or different, represent (C₁-C₈)alkyl or (C₃-C₈) cycloalkyl; or else R₃ and R₄, which may be identical and/or different, represent (C₁-C₈)alkyl or (C₃-C₈) cycloalkyl; or else alternatively T₁, T₂, R₃ and R₄, which may be identical and/or different, represent (C₁-C₈) alkyl or (C₃-C₈)cycloalkyl.

8. Method according to any one of the preceding claims, **characterized in that** M is a metal chosen from Pt, Pd and Ni.

9. Method according to any one of the preceding claims, **characterized in that** M is platinum in the 0 oxidation state.

10. Method according to any one of the preceding claims, **characterized in that** the metal complex has the formula: 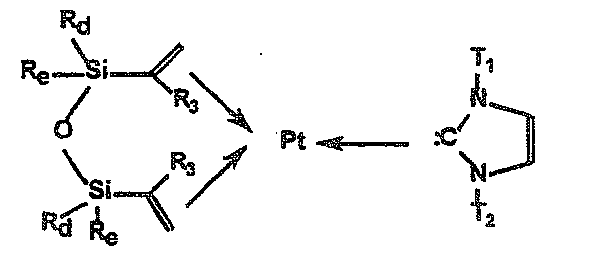 in which:
- R₃ represents a hydrogen atom; a (C₁-C₈)alkyl group; or a (C₃-C₈)cycloalkyl group optionally substituted with (C₁-C₄)alkyl;
- T₁ and T₂ are identical and represent (C₁-C₈)alkyl or (C₃-C₈)cycloalkyl;
- and R_{d} and Rₑ are as defined in Claim 1.

11. Method according to any one of the preceding claims, **characterized in that** the synthons contain a hydrocarbon ring in which is included an oxygen atom.

12. Method according to the preceding claim, **characterized in that** the synthons contain at least one hydrocarbon ring in which is included an oxygen atom, the synthons having the formula:
■ (1) 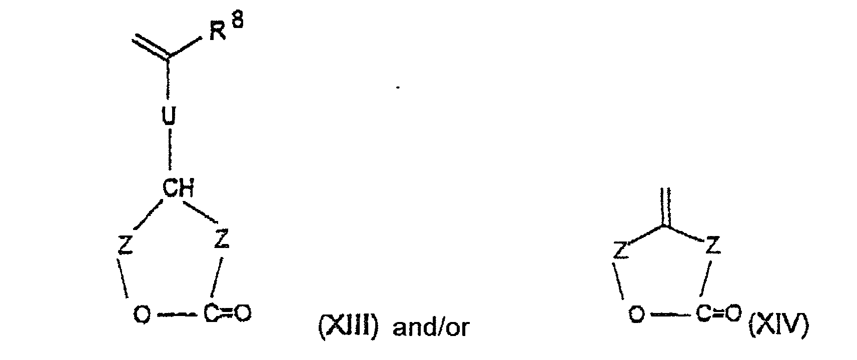 in which:
(i) the symbols Z, which may be identical and/or different, correspond to a divalent hydrocarbon radical chosen from the linear or branched alkylene radicals containing from 1 to 12 carbon atoms, one of the symbols Z possibly being a free valency;
(ii) the symbol U corresponds to a free valency or a divalent radical chosen from the linear or branched alkylene radicals containing from 1 to 12 carbon atoms and possibly containing a hetero atom, preferably an oxygen atom;
(iii) the symbol R⁸ corresponds to a hydrogen atom or monovalent hydrocarbon radical chosen from the linear or branched alkyl radicals containing from 1 to 12 carbon atoms, and preferably a hydrogen atom or a methyl radical;
■ (2) 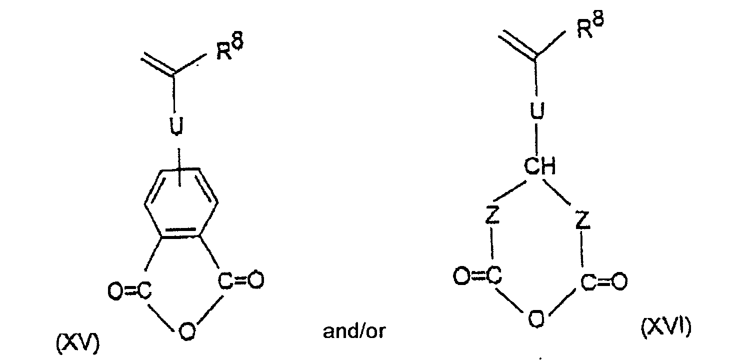 in which:
(i) the symbols Z, which may be identical and/or different, correspond to a divalent hydrocarbon radical chosen from the linear or branched alkylene radicals containing from 1 to 12 carbon atoms, one of the symbols Z possibly being a free valency;
(ii) the symbol U corresponds to a free valency or a divalent radical chosen from the linear or branched alkylene radicals containing from 1 to 12 carbon atoms and possibly containing a hetero atom, preferably an oxygen atom;
(iii) the symbol R⁸ corresponds to a hydrogen atom or monovalent hydrocarbon radical chosen from the linear or branched alkyl radicals containing from 1 to 12 carbon atoms, and preferably a hydrogen atom or a methyl radical;
■ and (3) 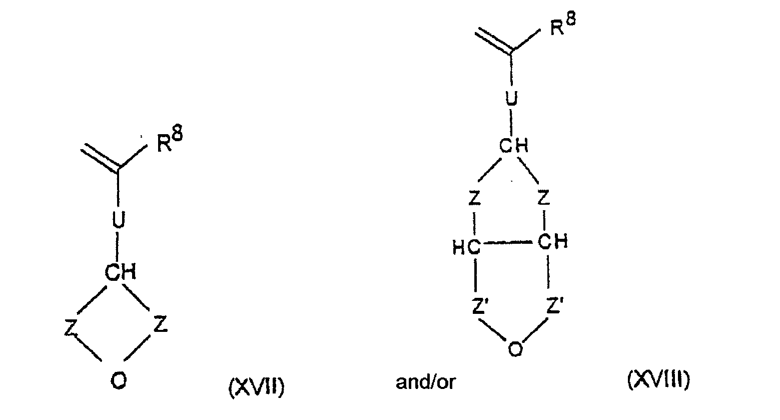 in which:
(i) the symbols Z, which may be identical and/or different, correspond to a divalent hydrocarbon radical chosen from the linear or branched alkylene radicals containing from 1 to 12 carbon atoms and possibly containing at least one hydroxyl function; one of the symbols Z possibly being a free valency for (XVII) and the two symbols Z can be simultaneously a free valency for (XVIII);
(ii) the symbols Z', which may be identical and/or different, correspond to a divalent hydrocarbon radical chosen from the linear or branched alkylene radicals containing from 1 to 12 carbon atoms; at least one of the symbols Z' possibly being a free valency;
(iii) the symbol U corresponds to a free valency or a divalent radical chosen from the linear or branched alkylene radicals containing from 1 to 12 carbon atoms, and possibly containing a hetero atom, preferably an oxygen atom;
(iv) the symbol R⁸ corresponds to a hydrogen atom or monovalent hydrocarbon radical chosen from the linear or branched alkyl radicals containing from 1 to 12 carbon atoms, and preferably a hydrogen atom or a methyl radical.

13. Method according to Claim 12, **characterized in that** the hydrocarbon ring of the synthons contains at most 8 atoms in said ring.

14. Hydrosilylation method according to any one of the preceding claims, **characterized in that** the silicone oil is linear or cyclic and has the mean formulae: 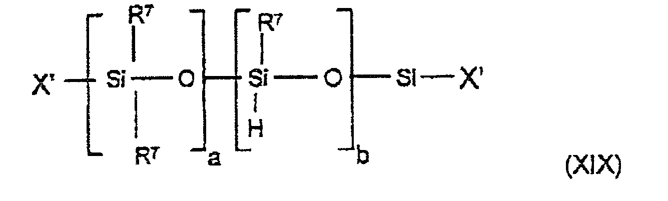 and/or 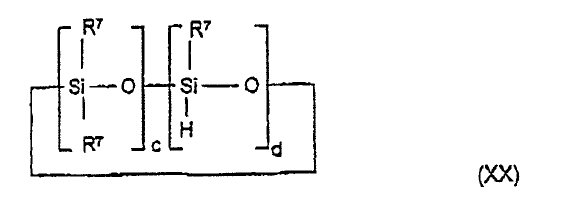 in which:
■ the symbols R⁷ which may be identical and/or different, correspond to a monovalent hydrocarbon radical chosen from the phenyl radical and the linear or branched alkyl radicals containing from 1 to 6 carbon atoms;
■ the symbols X' which may be identical and/or different, correspond to a monovalent radical chosen from R⁷, a hydrogen atom, a methoxy radical and an ethoxy radical;
■ a and b are integers or fractions, such that:
- 0 < a ≤ 200, preferably 0 < a ≤ 99
- 0 ≤ b ≤ 200, preferably 1 < b ≤ 100, and at least one of the two Xs corresponding to the hydrogen radical if b = 0;
- 5 < a+b ≤ 200, preferably 10 < a+b ≤ 100
■ c and d are integers or fractions, such that:
- 0 < c < 5, preferably 0 < c < 3
- 1 < d < 10, preferably 1 < d < 5,
- 3 < a+b < 10, preferably 3 < a+b < 5.

15. Use of a silicone oil which can be obtained using the method according to one of Claims 1 to 14, for preparing anti-adhesive products for paper, glass or plastic.

## Patentansprüche

1. Hydrosilylierungsverfahren von Synthonen mit mindestens einem Polyorganohydrogensiloxan, **dadurch gekennzeichnet, dass** die mit dem Polyorganohydrogensiloxan hydrosilylierten Synthone, die gleich oder verschieden sind, mindestens einen Kohlenwasserstoffcyclus, in den ein Sauerstoffatom eingeschlossen ist, einschließen, wobei die Reaktion in Gegenwart eines katalytischen Metallkomplexes der Formel I durchgeführt wird: 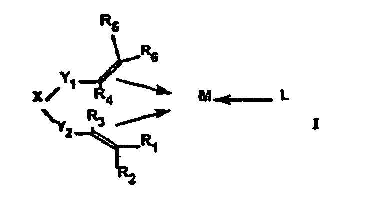 wobei:
• M ein Metall im Oxidationszustand 0 darstellt, das aus den Metallen der 8. Gruppe des Periodensystems, wie in Handbook of Chemistry and Physics, 65. Ausg., 1984-1985, veröffentlicht, ausgewählt ist;
• X O, NRₐ und/oder CR_{f}R_{g} darstellt;
• Y₁ und Y₂, die gleich und/oder verschieden sind, CR_{b}R_{c} und/oder SiR_{d}Rₑ darstellen;
• R₁, R₂, R₅ und R₆, die gleich oder verschieden sind, aus einem Wasserstoffatom, einer Alkylgruppe und/oder einer Arylgruppe, die gegebenenfalls mit Alkyl substituiert ist, ausgewählt sind;
• R_{3,} R_{4,} R_{a,} R_{b,} R_{c,} die gleich und/oder verschieden sind, aus einem Wasserstoffatom; einer Alkylgruppe; einer Acylgruppe; einer Arylgruppe, die gegebenenfalls mit einem Alkyl substituiert ist; einem Cycloalkyl, das gegebenenfalls mit einem Alkyl substituiert ist; und einer Arylalkylgruppe, in der der Arylteil gegebenenfalls mit Alkyl substituiert ist, ausgewählt sind;
• R_{d} und Rₑ, die gleich oder verschieden sind, aus einer Alkenylgruppe; einer Alkinylgruppe; einer Alkylgruppe; einer Alkoxygruppe; einer Acylgruppe; einer Arylgruppe, die gegebenenfalls mit einem Alkyl substituiert ist; einer Cycloalkylgruppe, die gegebenenfalls mit einem Alkyl substituiert ist; und einer Arylalkylgruppe, in der der Arylteil gegebenenfalls mit Alkyl substituiert ist, ausgewählt sind; oder
• wenn Y₁ und Y_{2,} die gleich oder verschieden sind, SiR_{d}Rₑ darstellen, zwei Gruppen R_{d,} die an zwei distinkte Siliciumatome gebunden sind, zusammen folgendes bilden:
* eine Kette der Formel: 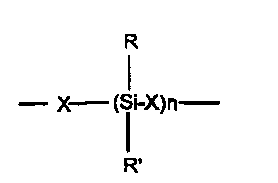 wobei n eine ganze Zahl von 1 bis 3 ist; X wie zuvor definiert ist; R und R', die gleich oder verschieden sind, eine der vorstehend für Rₑ gegebene Bedeutung einnehmen, mit der Maßgabe, dass, wenn n 2 oder 3 ist, ein einziges Siliciumatom der Kette mit einer oder zwei Alkenyl- oder Alkinylgruppen substituiert sein kann;
* eine gesättigte Kohlenwasserstoffkette, wobei die beiden Gruppen R_{d} zusammen mit den Siliciumatomen und X einen Cyclus mit 6 bis 10 Kettengliedern bilden; oder
• wenn Y₁ und Y_{2,} die gleich oder verschieden sind, CR_{b}R_{c} darstellen, zwei Gruppen R_{b,} die an distinkte Kohlenstoffatome gebunden sind, zusammen eine gesättigte Kohlenwasserstoffgruppe bilden, wobei die beiden Gruppen R_{b} zusammen mit den Kohlenstoffatomen, die sie tragen, und X einen Cyclus von 6 bis 10 Kettengliedern bilden;
• R_{f} und R_{g} unabhängig voneinander ein Wasserstoffatom; eine Alkylgruppe; eine Acylgruppe; eine Arylgruppe, die gegebenenfalls mit Alkyl substituiert ist; eine Cycloalkylgruppe, die gegebenenfalls mit Alkyl substituiert ist; eine Arylalkylgruppe, in der der Arylteil gegebenenfalls mit einem Alkyl substituiert ist; ein Halogenatom; eine Alkenylgruppe; eine Alkinylgruppe oder eine Gruppe SiG₁G₂G₃, wobei G₁, G₂, und G₃ unabhängig voneinander ein Alkyl darstellen; ein Alkoxy; ein Aryl, das gegebenenfalls mit einem Alkyl oder einem Alkoxy substituiert ist; oder ein Arylalkyl, in dem der Arylteil gegebenenfalls mit einem Alkyl oder einem Alkoxy substituiert ist, darstellen.
• L ein Carben der Formel II darstellt: 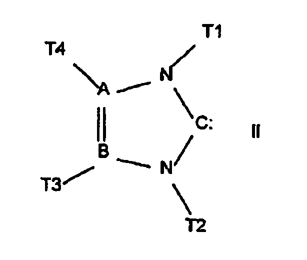
wobei:
- A und B, die gleich oder verschieden sind, C oder N darstellen, mit der Maßgabe, dass, wenn A N darstellt, T₄ dann nichts darstellt, und wenn B N darstellt, T₃ dann nichts darstellt;
- T₃ und T₄, die gleich und/oder verschieden sind, ein Wasserstoffatom, eine Alkylgruppe; eine Cycloalkylgruppe, die gegebenenfalls mit einem Alkyl oder einem Alkoxy substituiert ist; eine Arylgruppe, die gegebenenfalls mit einem Alkyl oder einem Alkoxy substituiert ist; eine Alkenylgruppe; eine Alkinylgruppe; oder eine Arylalkylgruppe, in der der Arylteil gegebenenfalls mit Alkyl oder Alkoxy substituiert ist, darstellen;
- T₁ und T₂, die gleich und/oder verschieden sind, folgendes darstellen: (i) eine Alkylgruppe; (ii) eine perfluorierte oder gegebenenfalls mit einer Perfluoralkylgruppe substituierte Alkylgruppe; (iii) eine Cycloalkylgruppe, die gegebenenfalls mit einer Alkyl- oder Alkoxygruppe substituiert ist; (iv) eine Arylgruppe, die gegebenenfalls mit einer Alkyl- oder Alkoxygruppe substituiert ist; (v) eine Alkenylgruppe; (vi) eine Alkinylgruppe; oder (vii) eine Arylalkylgruppe, in der der Arylteil gegebenenfalls mit einer Alkyl- oder Alkoxygruppe substituiert ist;
- oder T₁ und T₂, die gleich und/oder verschieden sind, einen einwertigen Rest der folgenden Formel (V) darstellen:
-V₁-V₂ (V)
wobei:
• V₁ ein zweiwertiger Kohlenwasserstoffrest, vorzugsweise ein linearer oder verzweigter C₁₋₁₀-Alkylenrest, der gegebenenfalls substituiert ist, ist,
• V₂ ein einwertiger Rest ist, der aus der Gruppe der folgenden Substituenten ausgewählt ist:
◆ Alkoxy, OR^{ν}, wobei R^{ν} Wasserstoff, Alkyl, Arylamin, vorzugsweise N(R^{ν})₂, wobei R^{ν} Wasserstoff, Alkyl, Aryl entspricht, entspricht, oder
- T₁ und T₂ unabhängig einen einwertigen Rest der folgenden Formel (W) darstellen:
-W-ω-W₂ (W)
wobei:
• W₁ ein zweiwertiger Kohlenwasserstoffrest, vorzugsweise ein linearer oder verzweigter C₁-C₁₀- Alkylrest, der gegebenenfalls substituiert ist, ist,
• ω folgendes darstellt: -R^{α}C=CR^{α}-, wobei R^{α} H oder eine Alkylgruppe darstellt
oder
-C≡C-
• W ein einwertiger Rest ist, der aus der Gruppe der folgenden Substituenten ausgewählt ist:
◆ R^{β} = Alkyl, H;
◆ Si-Alkyl oder Si-Alkoxy, vorzugsweise
-Si(R^{δ})₃, wobei R^{δ} = Alkyl;
◆ Alkohol, vorzugsweise -C(R^{ε})₂OH, wobei R^{ε} = OH, H oder Alkyl;
◆ Keton, vorzugsweise 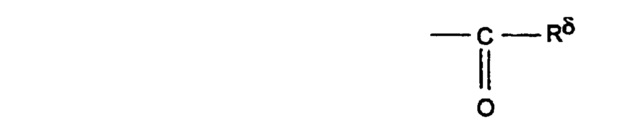 wobei R^{δ} = Alkyl; Alkenyl, Alkinyl;
◆ Carboxy, vorzugsweise 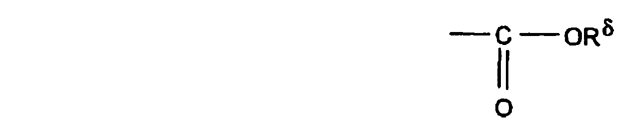
wobei R^{δ} = Alkyl; Alkenyl, Alkinyl;
◆ Amid, vorzugsweise 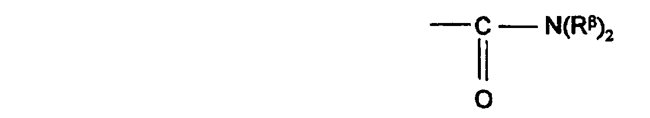
wobei R^{β} = H, Alkyl; Alkenyl, Alkinyl;
◆ Acyl, vorzugsweise 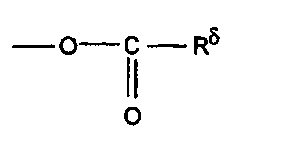
wobei R^{δ} = Alkyl; Alkenyl, Alkinyl;
- oder die Substituenten T₁, T₂, T₃ und T₄ paarweise, wenn sie an zwei nebeneinander liegenden Spitzen der Formel II angeordnet sind, eine gesättigte oder ungesättigte Kohlenwasserstoffkette bilden können.

2. Verfahren nach Anspruch 1, wobei X O darstellt; Y₁ und Y₂ unabhängig voneinander SiR_{d}Rₑ darstellen.

3. Verfahren nach einem der vorhergehenden Ansprüche, **dadurch gekennzeichnet, dass** R₁, R₂, R₅ und R₆ Wasserstoffatome sind.

4. Verfahren nach einem der vorhergehenden Ansprüche, **dadurch gekennzeichnet, dass** R₃ und R₄ ein Wasserstoffatom, eine Alkylgruppe; Aryl, das gegebenenfalls mit Alkyl substituiert ist, oder Cycloalkyl, das gegebenenfalls mit Alkyl substituiert, darstellen.

5. Verfahren nach einem der vorhergehenden Ansprüche, **dadurch gekennzeichnet, dass** A und B beide ein Kohlenstoffatom darstellen.

6. Verfahren nach einem der vorhergehenden Ansprüche, **dadurch gekennzeichnet, dass** T₃ und T₄ ein Wasserstoffatom darstellen.

7. Verfahren nach einem der vorhergehenden Ansprüche, **dadurch gekennzeichnet, dass** T₁ und T₂, die gleich und/oder verschieden sind, (C₁-C₈)-Alkyl oder (C₃-C₈)-Cycloalkyl darstellen; oder R₃ und R₄, die gleich und/oder verschieden sind, (C₁C₈)-Alkyl oder (C₃-C₈)-Cycloalkyl darstellen; oder T₁, T₂, R₃ und R₄, die gleich und/oder verschieden sind, (C₁-C₈)-Alkyl oder (C₃-C₈)-Cycloalkyl darstellen.

8. Verfahren nach einem der vorhergehenden Ansprüche, **dadurch gekennzeichnet, dass** M ein Metall ist, ausgewählt aus Pt, Pd und Ni.

9. Verfahren nach einem der vorhergehenden Ansprüche, **dadurch gekennzeichnet, dass** M Platin im Oxidationszustand 0 ist.

10. Verfahren nach einem der vorhergehenden Ansprüche, **dadurch gekennzeichnet, dass** der Metallkomplex die folgende Formel besitzt: 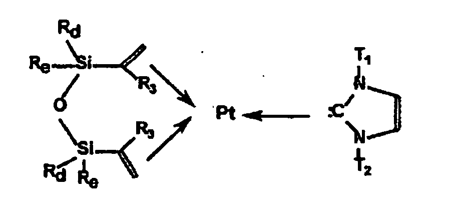 wobei:
- R₃ ein Wasserstoffatom; eine (C₁-C₈)-Alkylgruppe oder eine (C₃-C₈)-Cycloalkylgruppe, die gegebenenfalls mit (C₁-C₄)-Alkyl substituiert ist, darstellt;
- T₁ und T₂ identisch sind und (C₁-C₈)-Alkyl oder (C₃-C₈)-Cycloalkyl darstellen;
- und R_{d} und Rₑ wie in Anspruch 1 definiert sind.

11. Verfahren nach einem der vorhergehenden Ansprüche, **dadurch gekennzeichnet, dass** die Synthone einen Kohlenwasserstoffcyclus enthalten, in den ein Sauerstoffatom eingeschlossen ist.

12. Verfahren nach einem der vorhergehenden Ansprüche, **dadurch gekennzeichnet, dass** die Synthone mindestens einen Kohlenwasserstoffcyclus enthalten, in den ein Sauerstoffatom eingeschlossen ist, wobei die Synthone die folgende Formel besitzen:
■ (1) 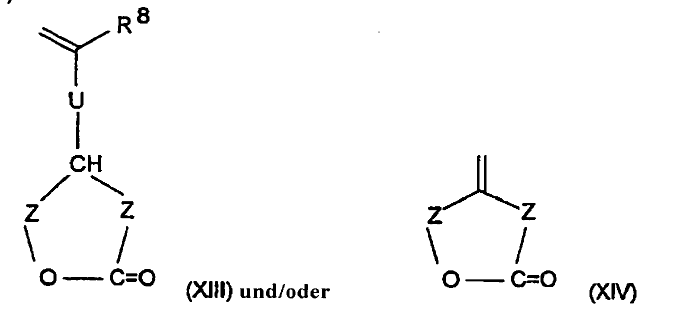 wobei:
(i) die Symbole **Z** gleich oder verschieden sind und einem zweiwertigen Kohlenwasserstoffrest entsprechen, der aus linearen oder verzweigten Alkylenresten mit 1 bis 12 Kohlenstoffatomen ausgewählt ist, wobei eines der Symbole **Z** eine freie Valenz sein kann;
(ii) das Symbol **U** einer freien Valenz oder einem zweiwertigen Rest entspricht, der aus den linearen oder verzweigten Alkylenresten mit 1 bis 12 Kohlenstoffatomen ausgewählt ist und ein Heteroatom, vorzugsweise ein Sauerstoffatom, enthalten kann;
(iii) das Symbol **R⁸** einem Wasserstoffatom oder einem einwertigen Kohlenwasserstoffrest entspricht, der aus linearen oder verzweigten Alkylresten mit 1 bis 12 Kohlenstoffatomen, vorzugsweise einem Wasserstoffatom oder einem Methylrest ausgewählt ist;
■ (2) 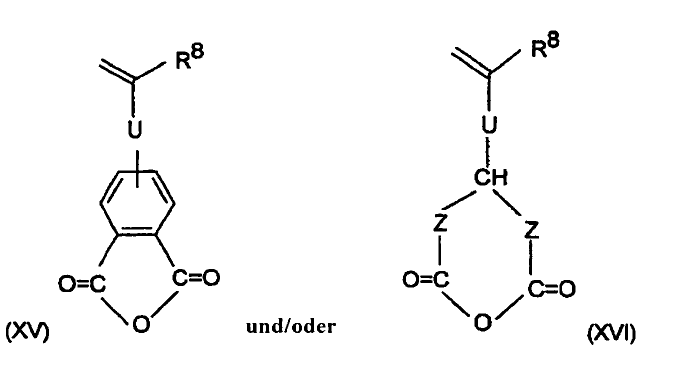 wobei:
(i) die Symbole **Z** gleich oder verschieden sind und einem zweiwertigen Kohlenwasserstoffrest entsprechen, der aus linearen oder verzweigten Alkylenresten mit 1 bis 12 Kohlenstoffatomen ausgewählt ist, wobei eines der Symbole **Z** eine freie Valenz sein kann;
(ii) das Symbol **U** einer freien Valenz oder einem zweiwertigen Rest entspricht, der aus den linearen oder verzweigten Alkylenresten mit 1 bis 12 Kohlenstoffatomen ausgewählt ist und ein Heteroatom, vorzugsweise ein Sauerstoffatom, enthalten kann;
(iii) das Symbol **R⁸** einem Wasserstoffatom oder einem einwertigen Kohlenwasserstoffrest entspricht, der aus linearen oder verzweigten Alkylresten mit 1 bis 12 Kohlenstoffatomen, vorzugsweise einem Wasserstoffatom oder einem Methylrest ausgewählt ist;
■ und (3) 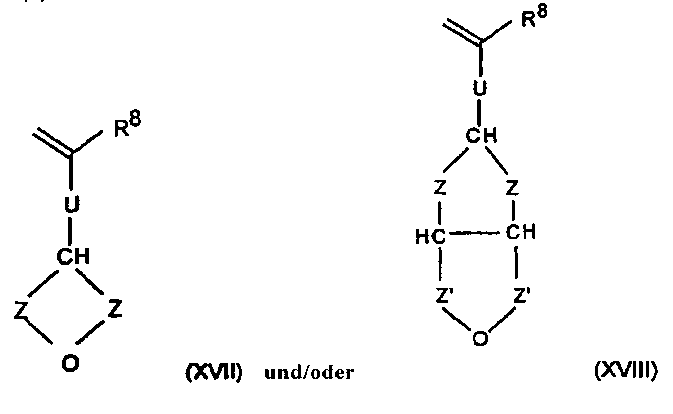 wobei:
(i) die Symbole Z, die gleich und/oder verschieden sind, einem zweiwertigen Kohlenwasserstoffrest entsprechen, der aus linearen oder verzweigten Alkylenresten mit 1 bis 12 Kohlenstoffatomen ausgewählt ist und mindestens eine Hydroxylfunktion enthalten kann; wobei eines der Symbole Z eine freie Valenz für (XVII) sein kann und die beiden Symbole Z gleichzeitig eine freie Valenz für (XVIII) sein können;
(ii) die Symbole Z', die gleich und/oder verschieden sind, einem zweiwertigen Kohlenwasserstoffrest entsprechen, der aus linearen oder verzweigten Alkylenresten mit 1 bis 12 Kohlenstoffatomen ausgewählt ist, wobei mindestens eines der Symbole Z' eine freie Valenz sein kann;
(iii) das Symbol U einer freien Valenz oder einem zweiwertigen Rest entspricht, der aus linearen oder verzweigten Alkylenresten mit 1 bis 12 Kohlenstoffatomen ausgewählt ist und ein Heteroatom, vorzugsweise ein Wasserstoffatom, enthalten kann;
(iv) das Symbol **R⁸** einem Wasserstoffatom oder einwertigen Kohlenwasserstoffrest, der aus linearen oder verzweigten Alkylresten mit 1 bis 12 Kohlenstoffatomen ausgewählt ist, und vorzugsweise einem Wasserstoffatom oder einem Methylrest entspricht.

13. Verfahren nach Anspruch 12, **dadurch gekennzeichnet, dass** der Kohlenwasserstoffcyclus der Synthone höchstens 8 Atome in dem Cyclus einschließt.

14. Hydrosilylierungsverfahren nach einem der vorhergehenden Ansprüche, **dadurch gekennzeichnet, dass** das Siliconöl linear oder zyklisch ist und die folgenden Durchschnittsformeln aufweist: 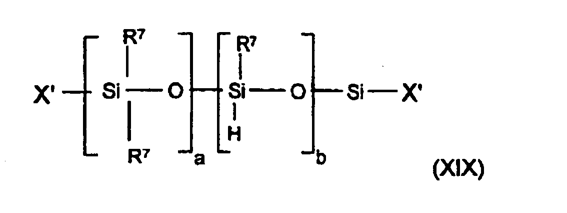 und/oder 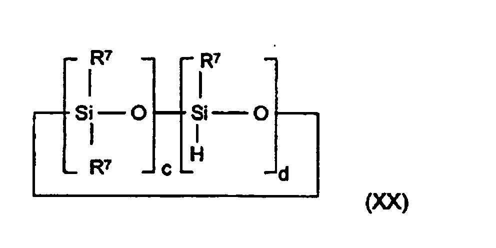 wobei:
■ die Symbole **R⁷,** die gleich oder verschieden sind, einem einwertigen Kohlenwasserstoffrest entsprechen, der aus dem Phenylrest und linearen oder verzweigten Alkylresten mit 1 bis 6 Kohlenstoffatomen ausgewählt ist;
■ die Symbole **X',** die gleich und/oder verschieden sind, einem einwertigen Rest entsprechen, der aus R⁷, einem Wasserstoffatom, einem Methoxyrest und einem Ethoxyrest ausgewählt ist;
■ a und b ganze Zahlen oder Brüche sind, wie:
- 0 < a ≤ 200, vorzugsweise 0 < a ≤ 99
- 0 ≤ b ≤ 200, vorzugsweise 1 < b ≤ 100, und mindestens eines der beiden X einem Wasserstoffrest entspricht, wenn b = 0 gilt;
- 5 < a+b ≤ 200, vorzugsweise 10 < a+b ≤ 100;
■ c und d ganze Zahlen oder Brüche sind, wie:
- 0 < c < 5, vorzugsweise 0 < c < 3
- 1 < d < 10, vorzugsweise 1 < d < 5,
- 3 < a+b < 10, vorzugsweise 3 < a+b < 5.

15. Verwendung eines Siliconöls, das zum Erhalt durch das Verfahren nach einem der Ansprüche 1 bis 14 zur Herstellung von adhäsionshemmenden Produkten für Papier, Glas oder Kunststoff geeignet ist.
